(19) Europäisches Patentamt
European Patent Office
Office européen des brevets

(11) **EP 2 178 935 B1**

(12) **FASCICULE DE BREVET EUROPEEN**

(45) Date de publication et mention de la délivrance du brevet:
**17.08.2016 Bulletin 2016/33**

(21) Numéro de dépôt: **08835532.6**

(22) Date de dépôt: **25.07.2008**

(51) Int Cl.:
***C08F 255/02*** *(2006.01)* ***C08L 51/06*** *(2006.01)*

(86) Numéro de dépôt international:
**PCT/FR2008/001119**

(87) Numéro de publication internationale:
**WO 2009/044021 (09.04.2009 Gazette 2009/15)**

(54) **POLYMERES D ' ETHYLENE ET D ' ESTERS VINYLIQUES MODIFIES PAR GREFFAGE, ET LEUR PROCEDE DE PREPARATION**

PFROPFMODIFIZIERTE VINYLESTER- UND ETHYLEN-POLYMERE, VERFAHREN ZU IHRER HERSTELLUNG UND IHRE VERWENDUNG ALS ZUSÄTZE ZUR VERBESSERUNG DER KÄLTEEIGENSCHAFTEN FLÜSSIGER KOHLENWASSERSTOFFE

GRAFT-MODIFIED VINYL ESTER AND ETHYLENE POLYMERS, PREPARATION METHOD THEREOF AND USE OF SAME AS ADDITIVES THAT IMPROVE THE COLD PROPERTIES OF LIQUID HYDROCARBONS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.07.2007 FR 0705514**

(43) Date de publication de la demande:
**28.04.2010 Bulletin 2010/17**

(73) Titulaire: **TOTAL MARKETING SERVICES**
**92800 Puteaux (FR)**

(72) Inventeurs:
- **TORT, Frédéric**
  **F-69530 Brignais (FR)**
- **PAPIN, Géraldine**
  **F-69007 Lyon (FR)**
- **HEROGUEZ, Valérie**
  **F-33700 Mérignac (FR)**

(74) Mandataire: **Hirsch & Associés**
**137, rue de l'Université**
**75007 Paris (FR)**

(56) Documents cités:
**EP-A- 1 674 554**
**US-A- 3 911 053**
**US-A- 4 161 452**
**US-A- 4 202 845**
**US-A- 6 106 584**
**US-A1- 2004 226 216**
**US-A1- 2007 157 509**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 2 178 935 B1**

## Description

### DOMAINE TECHNIQUE.

La présente invention concerne la synthèse et l'utilisation de polymères à base d'éthylène et d'ester vinyliques modifiés par greffage pour améliorer leur solubilité dans les hydrocarbures liquides et abaisser leur viscosité, comme additifs bifonctionnels efficaces pour abaisser la filtrabilité et l'écoulement à basse température des hydrocarbures liquides en particulier les distillats moyens issus de la distillation du pétrole et les pétroles bruts.

### CONTEXTE TECHNIQUE ET ART ANTERIEUR.

Depuis longtemps, l'industrie pétrolière a développé des additifs favorisant la filtrabilité des carburants aux basses températures : ce sont les polymères d'éthylène et d'acétate de vinyle et/ou de propionate de vinyle (EVA ou EVP), appelés additifs de TLF (Température Limite de Filtrabilité). Ils ont un rôle de modificateur de cristallisation et plus particulièrement le rôle de limiter l'agglomération et la taille des cristaux de paraffine formés à basse température, par exemple inférieure à 5°C, en vue de passer les filtres disposés à l'intérieur des moteurs à combustion interne ou dans les installations de chauffage. Ce type d'additifs, connu très largement par l'homme du métier, est systématiquement ajouté aux distillats moyens de type classique en sortie de raffinerie. Ces distillats additivés sont utilisés comme carburants pour moteur Diesel ou comme combustible de chauffage. Des quantités supplémentaires des ces additifs peuvent être rajoutés aux carburants vendus en stations service notamment pour satisfaire les spécifications grand froid.

D'autres types d'additifs comme les copolymères d'éthylène, d'acétate de vinyle et d'ester de vinyle ramifié tels que les néodecanoate de vinyle (VeoVA) ayant un rôle sur la TLF ont été décrits, notamment dans US 2004/0226216.

Pour améliorer à la fois la TLF et le point d'écoulement des distillats, on rajoute à ces additifs de TLF (EVA ou EVP) des additifs ayant la fonction d'agir soit seuls soit en combinaison avec ces additifs sur le point découlement des distillats. L'art antérieur décrit abondamment de telles combinaisons d'additifs améliorant à la fois la température limite de filtrabilité et la température d'écoulement aux basses températures des distillats hydrocarbonés de type classique.

Ainsi, le brevet US 3 275 427 décrit un distillat moyen de coupe de distillation comprise entre 177 et 400°C contenant un additif constitué de 90 à 10% en poids d'un copolymère d'éthylène comprenant de 10 à 30% de motifs acétate de vinyle de poids moléculaire compris entre 1000 et 3000 et de 10 à 90% en poids d'un polyacrylate de lauryl et/ou de polyméthacrylate de lauryl de masse moléculaire en poids variant de 760 à 100.000. Il est noté que la combinaison de ces polyacrylates et de ces EVA améliore à la fois la température de filtrabilité déterminée selon la norme NF EN116 et la température de point d'écoulement déterminée par la norme NF 60105.

Pour le transport des pétroles bruts et distillats lourds par pipe, les auteurs du brevet US 3726653 ont été confrontés à l'amélioration de l'écoulement notamment aux basses températures auxquelles ces produits pouvaient se figer dans les pipes. Pour améliorer ces propriétés dans des compositions hydrocarbonées contenant des paraffines dont 5 à 20% en poids ont un point d'ébullition supérieur à 350°C et un point de ramollissement supérieur à 35°C, les inventeurs proposent d'ajouter à ces compositions de 10 ppm à 2% en poids d'un mélange de polymère d'un ester oléfinique d'acides carboxyliques de 3 à 5 atomes de carbone avec un alcool de 14 à 30 atomes de carbone et de masse moléculaire en poids variant de 1000 à 1.000.000, avec un copolymère d'éthylène et d'acétate de vinyle (EVA) comprenant de 1 à 40, de préférence de 14 à 24 motifs acétate de vinyle de masse moléculaire moyenne de 20.000 à 60.000, le rapport molaire polymère d'ester oléfinique sur copolymère d'éthylène et d'acétate de vinyle variant de 0,1 à 10 :1.

Pour contrôler la taille des cristaux de paraffines présentes à des teneurs de moins de 3% dans des distillats moyens ayant un point d'ébullition compris entre 120°C et à 480°C, les auteurs du brevet US 4156422 proposent d'ajouter à ces distillats moyens de 10 ppm à 1% en poids d'un mélange d'un homopolymère d'un ester oléfinique d'acide acrylique ou méthacrylique comprenant une chaîne alkyl de 14 à 16 atomes de carbone et de masse moléculaire en poids variant de 1000 à 200.000, avec un copolymère d'éthylène et d'acétate de vinyle de masse moléculaire moyenne en nombre inférieure à 4000, le rapport molaire homopolymère d'ester oléfinique sur copolymère éthylène et d'acétate de vinyle variant de 0,1 :1 à 20 :1.

Cependant, les ressources en bases pour distillats moyens se sont diversifiées et ils présentent maintenant des compositions très différentes de celles des distillats moyens antérieurement produits et pour lesquels les additifs de filtrabilité notamment ceux à base de copolymères d'EVA ou d'EVP avaient été développés. En outre, l'évolution des spécifications depuis l'an 2000, et plus récemment en 2005, a conduit le raffineur à formuler de façon distincte les distillats pour utilisation comme carburants Diesel dans les moteurs, et les fiouls domestiques utilisés dans les installations de chauffage.

Les distillats utilisés sont généralement issus des opérations de raffinage notamment de la distillation directe des hydrocarbures, des procédés de craquage thermique, d'hydrocraquage et/ou de craquage catalytique et des procédés de viscoréduction.

Avec la demande croissante en carburants Diesel, le raffineur cherche à introduire des coupes de sources autres que pétrolières qui sont plus difficilement utilisables dans ces carburants car induisant sur ceux-ci des comportements vis-à-vis de la tenue à froid beaucoup moins bons, en augmentant la température de filtrabilité et la température d'écoulement de ceux-ci. Parmi ces nouvelles sources de distillats, on trouve :

- les coupes les plus lourdes issues des procédés de craquage et de viscoréduction concentrées en paraffines lourdes, comprenant plus de 18 atomes de carbone,
- les distillats synthétiques issus de la transformation du gaz tels que ceux issus du procédé Fischer Tropsch,
- les distillats synthétiques résultant du traitement de la biomasse d'origine végétale ou animale, comme notamment le NexBTL,
- et les huiles et/ou esters d'huiles végétales ou animales.

Ces nouvelles bases carburants peuvent être utilisées seules ou en mélange avec des distillats moyens pétroliers comme base carburant et/ou base de fioul domestique, et elles comprennent de longues chaînes paraffiniques supérieures ou égales à 16 atomes de carbone.

On a constaté que la température de filtrabilité des distillats obtenus par combinaison des bases pétrolières et de ces nouvelles sources était augmentée et que l'ajout d'additif classique de filtrabilité de type EVA et/ou EVP pouvait demeurer inefficace vis-à-vis de l'abaissement de cette température de filtrabilité. De plus ces additifs n'y sont plus assez bien solubilisés.

Ce même phénomène a été constaté avec des coupes de distillats moyens de nouveaux pétroles bruts arrivés sur le marché, beaucoup plus riches en paraffines à longues chaînes que ceux communément raffinés.

Il existe donc un besoin d'adapter les additifs de filtrabilité à ces nouvelles bases de distillats, et trouver des solutions pour améliorer conjointement le point d'écoulement et la solubilité de ceux-ci.

Une des voies choisies par la demanderesse est celle de l'amélioration de l'activité des additifs de filtrabilité classiques de type polymère d'éthylène et d'ester vinyliques, vis-à-vis de la température limite de filtrabilité des nouvelles bases de distillats moyens et de leur mélange avec des distillats classiques grâce à des modifications chimiques de ces polymères d'éthylène et d'ester vinyliques consistant à introduire des greffons le long de la chaîne polymère. Ces greffons visent à améliorer la solubilité de ces polymères d'éthylène et d'ester vinyliques dans les nouvelles bases sans altérer leur performance comme modificateurs de cristallisation, et donc leur efficacité en tant qu'additif de température limite de filtrabilité et de point d'écoulement.

Dans le brevet US 4161452, on décrit le greffage de monomères polymérisables tels que des acides carboxyliques insaturés sur des polymères polyoléfiniques en utilisant des procédés radicalaires en présence d'initiateurs.

Dans le brevet US6106584, on décrit des copolymères comprenant des unités éthylène et des unités (2 ou plus) dérivant de monomères d'ester d'alkyle acrylate et méthacrylate estérifiés par des groupes alkyles ayant jusqu'à 15 atomes de carbones. Ces copolymères sont préparés par les méthodes classiques de polymérisation radicalaires en solution avec initiateurs de polymérisation sous hautes pressions, ces méthodes étant particulièrement délicates à mettre en oeuvre.

US 2006/0137242 décrit des additifs anti-sédimentation pour distillats d'huiles minérales à bas taux de soufre, notamment des distillats moyens, destinés à améliorer les propriétés d'écoulement desdites huiles et particulièrement la dispersabilité des paraffines à basse température ; ces additifs sont des copolymères greffés susceptibles d'être obtenus par greffage d'un ester d'alkyl acrylate en C8-C22 sur un copolymère d'EVA contenant de 3,5 à 21% en moles d'acétate de vinyle et ont de préférence une masse moléculaire en nombre (Mn) comprise entre 1.000 et 10.000 g/mol.

US 2007/0157509 décrit également des additifs anti-sédimentation pour distillats d'huiles minérales à bas taux de soufre, notamment des distillats moyens, destinés à améliorer les propriétés d'écoulement desdites huiles et particulièrement la dispersabilité des paraffines à basse température ; ces additifs sont des copolymères greffés susceptibles d'être obtenus par greffage d'un ester d'alkyl acrylate en C8-C22 sur un copolymère d'éthylène et de 0,5 à 16% en moles d'au moins un ester vinylique $CH_2=CH-OCO-R^1$ et ne contenant pas plus de 3,5% en moles d'acétate de vinyle ; ces copolymères ont de préférence une Mn entre 1.000 et 10.000 g/mol. Ils sont de préférence utilisés en combinaison avec d'autres co-additifs de type résine alkyle phénol et un additif de TLF de type EVA.

Une méthode moins classique pour introduire des ramifications de type polymérique le long de la chaîne polymère a été décrite par Garcia F. G. et al dans Eur Polym J. 2002, 38, 759. Il s'agit du greffage de polyméthylméthacrylate sur un copolymère d'EVA par réaction de polymérisation radicalaire par transfert d'atomes (ATRP) en présence d'un système catalytique comprenant CuCl et Bipyridine à 80°C permettant d'atteindre un taux de greffage d'au plus 12%. Une telle méthode est plus facile à mettre en oeuvre car elle n'utilise pas la haute pression.

**RESUME DE L'INVENTION.**

Le premier but de la présente invention est de fournir des copolymères d'éthylène et d'ester vinyliques modifiés

chimiquement par greffage de ramifications.

Les modifications chimiques des copolymères d'éthylène et d'ester vinyliques permettent d'une part d'abaisser la viscosité de ces polymères et d'autre part d'améliorer leur solubilité dans les hydrocarbures liquides tout en conservant voire en améliorant leur efficacité pour modifier le processus de cristallisation des paraffines contenues dans les hydrocarbures.

Un autre but de l'invention est de fournir un procédé de préparation de ces polymères, notamment via un procédé ATRP adapté au greffage chimique de polymères d'EVA avec des polyacrylates, voire un procédé ATRP amélioré par rapport à celui décrit dans la littérature.

Dans le brevet US 4202845, on décrit des copolymères d'éthylène et de vinyl acétate greffés par un mélange d'une majeure proportion d'ester d'acide acrylique et d'une proportion mineure d'un comonomère éthylénique insaturé vulcanizable.

L'application vise en particulier l'additivation de bases type distillat pour carburant Diesel ou pour fioul domestiques, riches en paraffines, faiblement aromatiques et ayant en conséquence, un faible pouvoir solvant.

Cette invention présente l'avantage de fournir des polymères très facilement solubles dans les hydrocarbures, de plus faible viscosité et utilisables en tant qu'additifs de filtrabilité pour hydrocarbures.

L'amélioration de solubilité apportée par le greffage des polymères d'éthylène et d'ester de vinyle permet d'obtenir des hydrocarbures additivés en polymères greffés qui conservent leurs caractéristiques de filtrabilité initiale à température ambiante et qui restent parfaitement filtrables au niveau des filtres se trouvant généralement en amont des systèmes d'alimentation de moteur ou des installations de chauffage.

Par ailleurs, la diminution de viscosité des polymères apportée par le greffage permet d'accéder à des solutions concentrées en polymère dans les hydrocarbures à teneur réduite en solvant aromatique, sans pénaliser la pompabilité et la mise en oeuvre de ces solutions (contraintes de viscosité et de comportement rhéologique dans les systèmes de pompage ou d'injection).

A cette fin, la présente invention propose un copolymère d'éthylène et d'ester de vinyle greffé, de masse molaire supérieure à 10.000 $g.mol^{-1}$ comprenant :

a) une unité dérivée de l'éthylène de formule A - $(CH_2-CH_2)_n$- dans laquelle n est un nombre entier qui varie de 45 à 650 ;

b) au moins une unité de formule B : - $(CH_2-CHOCOR_1)_{m-x}$- dans laquelle m est un nombre entier qui varie de 5 à 110, et $R_1$ est au moins un groupe choisi parmi les groupes alkyl linéaire ou ramifié en $C_1$-$C_{15}$ ;

c) une unité de formule C : - $(CH_2-CHOH)_{x1}$- dans laquelle $x_1$ va de 0 à 0,95 x ;

d) au moins une unité de formule D : - $(CH_2-CHG)_{x2}$- ou de formule D' : -$CH_2C(OCOCH3)Q)_{x2}$- dans laquelle $x_2$ est toujours différent de 0 et varie de 0,05 x à x, de préférence $x_2$ vaut x et G représente un groupe de formule G1 ou G2 ou G3 où

G1 est représenté par la formule -$OCOCHCH_3Q$-
G2 est représenté par la formule -$OCOCH_2Q$-
G3 est représenté par la formule -$OCOCH_2SQ$-

dans lesquels Q représente :

- soit une unité de formule Q1 -$(CH_2-CZCOOR)_{p1}-X_q$ où $p_1$ varie de 1 à 800;
- soit une unité de formule Q2 -$(CH_2-CZOCOR)_{p2}-X_q$ où $p_2$ varie de 1 à 100;

où X représente un halogène, de préférence Br ou I, q varie de 0 à 1, Z représente un hydrogène ou un $CH_3$, R représente un groupe alkyle linéaire ou ramifié, saturé ou insaturé en $C_1$-$C_{30}$, de préférence en $C_4$-$C_{15}$ ;

copolymère dans lequel :

$x = x_1 + x_2$ et x varie de 0,25 à 55 ;
le% en moles des unités A dans le polymère est de 29 à 97% en moles;
le% en moles des unités B dans le polymère est de 1 à 20% en moles ;
le% en moles des unités C dans le polymère est de 0 à 10% en moles ;
le% en moles des unités D ou D' dans le polymère est de 0,6 à 64% en moles et le% en moles des unités Q dans D ou D' est de 8,2 à 99,9% en moles.

Selon un mode de réalisation, le copolymère d'éthylène et d'ester de vinyle greffé a une masse molaire comprise de 10.500 à 30.000 $g.mol^{-1}$, et comprend :

a) une unité dérivée de l'éthylène de formule A - $(CH_2\text{-}CH_2)_n$- dans laquelle n est un nombre entier qui varie de 45 à 650, de préférence 75 à 520.

b) au moins une unité de formule B : - $(CH_2\text{-}CHOCOR_1)_{m-x}$- dans laquelle m est un nombre entier qui varie de 5 à 110, de préférence 10 à 75, et $R_1$ est au moins un groupe choisi parmi les groupes alkyl linéaire ou ramifié en $C_1$-$C_{15}$ ;

c) une unité de formule C : - $(CH_2\text{-}CHOH)_{x1}$- dans laquelle $x_1$ va de 0 à 0,95 x, de préférence $x_1$ vaut 0 ;

d) au moins une unité de formule D : - $(CH_2\text{-}CHG)_{x2}$- dans laquelle $x_2$ est toujours différent de 0 et varie de 0,05 x à x, de préférence $x_2$ vaut x et G représente un groupe de formule G1 -$OCOCHCH_3Q$- dans lequel.Q représente :

- soit une unité de formule Q1 -$(CH_2\text{-}CZCOOR)_{p1}\text{-}X_q$ $p_1$ varie de 1 à 800, de préférence de 1 à 50 ;
- soit une unité de formule Q2 -$(CH_2\text{-}CZOCOR)_{p2}\text{-}X_p$ $p_2$ varie de 1 à 100, de préférence de 1 à 10 ;

où X représente un halogène, de préférence Br, q varie de 0 à 1, Z représente un hydrogène ou un $CH_3$, R représente un groupe alkyle linéaire ou ramifié, saturé ou insaturé en $C_1$-$C_{30}$ ou de préférence en $C_4$-$C_{15}$ ; copolymère dans lequel :

$x = x_1 + x_2$ et x varie de 0,25 à 55 de préférence de 0,5 à 40 ;
le% en moles des unités A dans le polymère est de 29 à 97% en moles, de préférence 54 à 90% en moles ;
le% en moles des unités B dans le polymère est de 1 à 20% en moles de préférence 3,5 à 11% en moles;
le% en moles des unités C dans le polymère est de 0 à 10% en moles, de préférence 0% en moles ;
le% en moles des unités D dans le polymère est de 0,6 à 64% en moles de préférence 2,3 à 42% en moles et le% en moles des unités Q dans D va de 8,2 à 99,9% en moles, de préférence de 35 à 98,7% en moles.

De préférence, dans les copolymères de l'invention Q représente une unité de formule Q1 -$(CH_2\text{-}CZCOOR_{q1})_{p1}\text{-}X_q$ dans laquelle q vaut 0, $p_1$ varie de 1 à 50.

De préférence, dans les copolymères de l'invention $R_{q1}$ représente un groupement alkyle linéaire ou ramifié, saturé ou insaturé en $C_6$-$C_{15}$ de préférence en $C_6$-$C_{12}$, le 2-éthylhexylacrylate étant préféré.

De préférence, dans les copolymères de l'invention, Q représente une unité de formule Q2 -$(CH_2\text{-}CZOCOR_{q2})_{p2}\text{-}X_q$ dans laquelle q vaut 0, $p_2$ varie de 1 à 10, Z est H, et $R_{q2}$ représente un groupe alkyl ramifié en $C_5$ à $C_{25}$ de préférence en $C_5$ à $C_{15}$ dans lequel la ramification est située en n'importe quel point du radical alkyl, de préférence en position 2 ou 3 de la chaîne alkyle, de préférence de manière à obtenir un carbone tertiaire.

De préférence, dans les copolymères de l'invention, le groupe $OCOR_{q2}$ est choisi parmi les groupes pivalate, isopentanoate, isohexanoate, 2-ethylhexanoate, isononanoate, isodécanoate, isotridécanoate, néononanoate, néodecanoate et néoundécanoate.

De préférence, dans les copolymères de l'invention, le radical $OCOR_{q2}$ provient des acides gras végétaux et/ou animaux dans lesquels le groupe $R_{q2}$ comprend des chaînes alkyles saturées ou insaturées, linéaires ou ramifiées en $C_8$ à $C_{25}$, de préférence en $C_{12}$ à $C_{15}$.

Selon un mode de réalisation, dans les copolymères de l'invention, l'unité de formule B représente :

a) soit une unité de formule B' -$(CH_2\text{-}CHOCOR'_1)_{m'-x}$ dans laquelle $R'_1$ est le groupe $CH_3$, m' varie de 10 à 75 ;
b) soit une unité de formule B" -$(CH_2\text{-}CHOCOR''_1)_{m''-x}$ dans laquelle $R''_1$ est le groupe $C_2H_5$, m" varie de 10 à 75 ;
c) soit une unité de formule B"' -$(CH_2\text{-}CHOCOR'''_1)_{m'''-x}$ dans laquelle $R'''_1$ est un groupe alkyl ramifié en $C_5$ à $C_{15}$ dans lequel la ramification est située en n'importe quel point du radical alkyl, de préférence en position 2 ou 3 de la chaîne alkyle, de préférence de manière à obtenir un carbone tertiaire, m'" varie de 10 à 75 ; soit un mélange de celles-ci, de préférence le mélange des unités B' et B" ou des unités B' et B"' ou des unités B" et B"'.

Selon un mode de réalisation, dans le copolymère selon l'invention :

n = 79 à 515;
l'unité de formule B représente une unité de formule B' -$(CH_2\text{-}CHOCOR'_1)_{m'-x}$ dans laquelle $R'_1$ est le groupe $CH_3$, et m' varie de 10 à 71 ;
x varie de 0,5 à 36 avec $x_1 = 0$.
Q représente une unité de formule Q1 - $(CH_2\text{-}CHCOOR)_{p1}\text{-}X_q$ dans laquelle q vaut 0, p1 varie de l à 50, et R représente un groupe alkyle linéaire ou ramifié, saturé ou insaturé en $C_1$-$C_{30}$, de préférence en $C_4$-$C_{15}$, avantageusement en $C_6$-$C_{15}$ et encore plus avantageusement en $C_6$-$C_{12}$, et plus particulièrement le 2-éthylhexylacrylate, le% en moles des unités A dans le polymère est de 54 à 90% en moles,
le% en moles des unités B dans le polymère est de 3,5% à 11% en moles,
le% en moles des unités C dans le polymère est de 0% en moles,
le% en moles des unités D dans le polymère est de 2,3% à 42% en moles et le% en

moles des unités Q dans l'unité D est de 35% à 98,7% en moles.

Selon un autre objet, l'invention propose un procédé de préparation des polymères greffés selon l'invention comprenant les étapes de :

i) fourniture d'un polymère d'éthylène et d'ester de vinyle de départ comprenant :

a) des unités dérivées de l'éthylène de formule A - $(CH_2\text{-}CH_2)_n$-
b) au moins une unité de formule B : - $(CH_2\text{-}CHOCOR_1)_m$ dans laquelle $R_1$ est au moins un groupe choisi parmi les groupes alkyl linéaires ou ramifiés en $C_1$-$C_{15}$; un groupe $CH_2SH$ ou $CH_2I$ ;
n et m variant dans des gammes de valeur telles que les masses moléculaires moyennes en nombre Mn du polymère de départ vont de 3.000 à 20.000g.mol$^{-1}$; puis

ii) introduction d'un initiateur de radicaux libres et réaction de polymérisation radicalaire au niveau des sites d'amorçages d'un monomère polymérisable de formule M1 CH2=CZCOOR, ou bien de formule M2 $CH_2$=CZOCOR, monomère M1 ou M2 dans lequel Z représente un hydrogène ou un $CH_3$, le groupe R représente un groupe alkyle linéaire ou ramifié, saturé ou insaturé en $C_1$-$C_{30}$, réaction telle que le degré de polymérisation p1 du monomère M1 pour donner l'unité Q1 sur le site d'amorçage va de 1 à 800, ou bien le degré de polymérisation p2 du monomère M2 pour donner l'unité Q2 sur le site d'amorçage va de 1 à 100.

Selon un mode de réalisation le procédé de préparation des polymères greffés selon l'invention comprend les étapes de :

j) fourniture d'un polymère d'éthylène et d'ester de vinyle de départ comprenant :

a) des unités dérivées de l'éthylène de formule A - $(CH_2\text{-}CH_2)_n$-
b) au moins une unité de formule B : - $(CH_2\text{-}CHOCOR_1)_m$- dans laquelle $R_1$ est au moins un groupe choisi parmi les groupes alkyl linéaires ou ramifiés en $C_1$-$C_{15}$ ;
n et m variant dans des gammes de valeur telles que les masses moléculaires moyennes en nombre Mn du polymère de départ vont de 3000 à 20000g.mol$^{-1}$ ; puis

jj) réaction d'hydrolyse partielle des esters d'alkyles présents dans l'unité B telle que le taux d'hydrolyse est inférieur ou égal à 50% des sites hydrolysables, de préférence inférieur à 20% des dits sites, puis
jjj) réaction d'estérification au moins partielle de ces sites par un halogénure d'acide halogéné de formule XOC-$CH_{2-j}X_j$-$CH_3$ dans laquelle j vaut 1 ou 2 et X représente un halogène de préférence Cl, telle que le taux d'estérification est supérieur à 50% de préférence 80%, ou encore de 100% ; puis
jjjj) réaction de polymérisation au niveau des sites d'amorçages porteurs d'un halogène, d'un monomère de formule M1 $CH_2$=CZCOOR, ou bien d'un monomère de formule M2 $CH_2$=CZOCOR, monomère dans lequel Z représente un hydrogène ou un $CH_3$, le groupe R représente un groupe alkyle linéaire ou ramifié, saturé ou insaturé en $C_1$-$C_{30}$, réaction telle que le degré de polymérisation p1 du monomère M1 pour donner l'unité Q1 sur le site d'amorçage va de 1 à 50, ou bien le degré de polymérisation p2 du monomère M2 pour donner l'unité Q2 sur le site d'amorçage va de 1 à 6.

Selon un mode de réalisation dans le procédé de préparation selon l'invention l'étape jjjj) est effectuée par polymérisation radicalaire par transfert d'atomes (ATRP) en présence d'un système catalytique comprenant un métal de transition, de préférence un halogénure de cuivre, tel que le CuBr, et un ligand azoté.

Selon un autre mode de réalisation dans le procédé de préparation selon l'invention l'étape jjjj) est effectuée par voie radicalaire en présence d'un initiateur de radicaux.

Selon un autre mode de réalisation dans le procédé de préparation selon l'invention l'étape jj) est suivie d'une étape kkk) de greffage d'un polyacrylate fonctionnalisé de formule TOC-$(CH2\text{-}CHCOOR)_{p1}$- dans laquelle p1 et R sont tels que défini précédemment et T représente un halogène en particulier le Cl ou un groupe OH, sur les groupes alcool du copolymère partiellement hydrolysé obtenu à l'étape jj).

De préférence, dans le procédé selon l'invention le taux de greffage en poids des unités de copolymères Q1 ou Q2 obtenues par polymérisation des monomères de type M1 ou M2 sur lesdits sites d'amorçage est de 10 à 80% de préférence de 15 à 70%.

Selon un autre objet l'invention fournie une solution concentrée d'un polymère selon l'invention dans un distillat hydrocarboné, de préférence à une concentration de plus de 50% en poids, de préférence de 60 à 80% en poids.

Selon un autre objet l'invention propose l'utilisation de la solution concentrée comme additif de filtrabilité et

d'écoulement pour les hydrocarbures de type distillats moyens.

De préférence, cette utilisation est effectuée dans les hydrocarbures dont la teneur en n-paraffines contenant plus de 18 atomes de carbone supérieure à 4% en poids.

De préférence on utilise la solution concentrée selon l'invention comme base pour les carburants pour moteurs Diesel et les fiouls domestiques.

Selon un autre objet l'invention propose un additif bifonctionnel pour abaisser la filtrabilité et l'écoulement à basse température des hydrocarbures liquides comprenant un polymère greffé selon l'invention.

Selon un autre objet l'invention propose des distillats moyens comprenant au moins une partie majeure d'une coupe hydrocarbonée de type distillat moyen de teneur en soufre inférieur à 5000 ppm de préférence inférieur à 500 ppm, et plus préférentiellement inférieur à 50 ppm, et d'une partie mineure d'au moins un additif bifonctionnel de filtrabilité et d'écoulement défini ci-dessus.

De préférence, dans les distillats selon l'invention, la partie majeure est constituée par les distillats de température d'ébullition comprise entre 150 et 450°C, de température de cristallisation commençante Tcc supérieure ou égale à -5°C, de préférence comprise entre - 5°C et +10°C, et comprend les distillats de distillation directe, les distillats sous vide, les distillats hydrotraités, les distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (biomass to liquid) de la biomasse végétale et/ou animale, prise seule ou en combinaison, et les esters d'huiles végétales et animales ou leurs mélanges.

De préférence, les distillats selon l'invention ont une teneur en n-paraffines contenant plus de 18 atomes de carbone supérieure à 4% en poids.

De préférence, les distillats selon l'invention ont teneur en poids de n-paraffines dont le nombre de carbone est supérieur à 24, est supérieure ou égale à 0,7%.

De préférence, les distillats selon l'invention ont une teneur en poids de n-paraffines ayant un nombre de carbone variant de C24 à C40 varie de 0,7 à 2%.

Selon un autre objet l'invention propose des carburants Diesel comprenant de 0 à 500 ppm de soufre et comprenant au moins un distillat selon l'invention.

De préférence, le carburant comprend un distillat selon l'invention dans lequel la partie mineure comprend de 10 à 5000 ppm d'au moins un additif bifonctionnel de filtrabilité et d'écoulement décrit plus haut éventuellement en mélange d'autres additifs détergents, dispersants, désémulsifiants, anti-mousses, biocide, réodorants, améliorants de cétane, anti-corrosions, modificateurs de friction, améliorants de lubrifiance, de combustion, de point de trouble, de point d'écoulement, d'antisédimentation et de conductivité.

Selon un autre objet l'invention propose un fioul de chauffage comprenant de 0 à 5000 ppm de soufre comprenant au moins un distillat selon l'invention.

Selon un autre objet l'invention propose un fioul lourd comprenant au moins un distillat selon l'invention.

## DESCRIPTION DETAILLEE DES MODES DE REALISATION.

Description des polymères de départ.

Les copolymères d'éthylène et d'ester vinyliques de départ utilisés dans lé procédé de l'invention sont des copolymères statistiques comprenant :

a) une unité dérivée de l'éthylène de formule A-$(CH_2\text{-}CH_2)_n$-

b) au moins une unité de formule B : -$(CH_2\text{-}CHOCOR_1)_m$- dans laquelle et $R_1$ est au moins un groupe choisi parmi les groupes alkyl linéaire ou ramifié en $C_1$-$C_{15}$, le groupe $CH_2SH$ ou $CH_2I$ ;

n et m variant dans des gammes de valeur telles que les masses moléculaire moyennes en nombre Mn du polymère de départ vont de 3000 à 20000 g.mol$^{-1}$, de préférence de 5000 à 15000 g.mol$^{-1}$. De préférence n est un nombre entier qui varie de 45 à 650 et m est un nombre entier qui varie de 5 à 110.

Selon un mode particulier, lequel l'unité de formule B représente :

a) soit une unité de formule B'-$(CH_2\text{-}CHOCOR'_1)_m$ dans laquelle $R'_1$ est le groupe $CH_3$, m' varie de 10 à 75 ;

b) soit une unité de formule B" -$(CH_2\text{-}CHOCOR''_1)_{m''}$ dans laquelle $R''_1$ est le groupe $C_2H_5$, m" varie de 10 à 75 ;

c) soit une unité de formule B'" -$(CH_2\text{-}CHOCOR'''_1)_{m'''}$ dans laquelle $R'''_1$ est un groupe alkyl ramifié en $C_5$ à $C_{15}$ dans lequel la ramification est située en n'importe quel point du radical alkyl, de préférence en position 2 ou 3 de la chaîne alkyle, de préférence de manière à obtenir un carbone tertiaire, m'" varie de 10 à 75 ; soit un mélange de celles-ci, de préférence le mélange des unités B' et B" ou le mélange des unités B' ou B" avec B'".

De préférence le groupe $OCOR_1$ est un acétate de vinyle EVA ou un propionate de vinyle EVP ou encore un neoalkanoate de vinyle EVeo. On peut aussi utiliser des unités de formule B dans laquelle $R_1$ est un groupe $CH_2SH$ ou $CH_2I$.

C'est le nombre m de groupes esters, et leur distribution statistique le long de la chaîne qui contrôle la longueur moyenne des segments polyéthylène, et en conséquence la solubilité du polymère dans le gazole. L'EVA et/ou EVP et/ou EVeo peut s'incorporer dans le cristal de paraffine, et ainsi contrôler la cristallisation des paraffines en modifiant la taille et la forme des cristaux.

Dans le cas c) relative à l'unité de formule B'" les groupes esters d'alkyl ramifiés sont des groupes de $C_5$ à $C_{15}$ dans lequel la ramification est située en n'importe quel point du radical alkyl, de préférence en position 2 ou 3 de la chaîne alkyle, de préférence de manière à obtenir un carbone tertiaire. De préférence le groupe neoalkanoate OCOR'" est choisi parmi les groupes pivalate, isopentanoate, isohexanoate, 2-ethylhexanoate, isononanoate, isodécanoate, isotridécanoate, néononanoate, néodecanoate et néoundécanoate.

Description générale des procédés de préparation des polymères greffés selon l'invention.

Le procédé de préparation de polymères à base d'éthylène et d'ester de vinyle, selon l'invention s'effectue en présence d'initiateurs de radicaux, par exemple de type peroxide. Cet agent va permettre d'initier la réaction de polymérisation radicalaire d'un monomère vinylique substitué sur le copolymère d'ethylène et d'ester de vinyle de départ tel que décrit plus haut. Durant cette étape on forme les sites d'amorçage sur lesquels s'effectue la copolymérisation du monomère, selon un procédé classique de polymérisation radicalaire.

Ainsi, on passe soit par la formation d'un radical libre $C^{\bullet}$ situé sur le squelette du polymère d'éthylène et d'ester de vinyle de départ au niveau du carbone tertiaire de l'unité B et correspondant à : $-(CH_2{=}C^{\bullet}OCOR_1)_m-$, soit par la formation d'un radical libre $C^{\bullet}$ situé sur le motif ester branché sur l'unité ester du polymère d'éthylène et d'ester de vinyle de départ au niveau du premier carbone du groupe alkyl $R_1$ de l'unité B et correspondant à: $-(CH_2\text{-}CHO\text{-}COC^{\bullet}HR_1)_m-$.

Puis la polymérisation s'effectue par voie radicalaire en présence d'un monomère vinylique substitué polymérisable au niveau du site d'amorçage porteur du radical libre $C^{\bullet}$.

Lorsque le groupe $R_1$ est un groupe $CH_2SH$ ou $CH_2I$, la polymérisation du monomère vinylique substitué s'effectue soit sur l'atome S soit sur le carbone porteur de l'iode en tant que site d'amorçage..

Selon un autre mode de réalisation, le polymère d'éthylène et d'ester de vinyle de départ, est préalablement activé par introduction de sites d'amorçage halogénés avant la réaction de polymérisation d'un monomère vinylique substitué. Dans ce cas, cette polymérisation peut s'effectuer soit par un procédé par transfert d'atomes (ATRP) en présence d'un système catalytique, soit par un procédé classique de polymérisation radicalaire en présence d'initiateurs de radicaux.

Le procédé par ATRP est mis en oeuvre en présence d'un système catalytique comprenant un métal de transition et un ligand azoté. Dans ce cas, on peut obtenir un copolymère greffé par des motifs polyéthylène substitués, et éventuellement porteur d'un halogène.

Pour effectuer le greffage du monomère ester de vinyle par ATRP, il est tout d'abord nécessaire de former un copolymère activé en créant sur le copolymère des sites d'amorçage.

Ce copolymère activé s'obtient en hydrolysant partiellement les groupes $OCOR_1$ de l'unité B présents dans la chaîne du polymère dans un premier temps, puis en les estérifiant totalement.

Ce mode opératoire d'hydrolyse puis estérification est analogue à celui décrit par Garcia F. G. et al dans Eur Polym J. 2002, 38, 759.

Ainsi, le copolymère d'éthylène et d'ester vinylique activé est obtenu par une première étape d'hydrolyse partielle des esters présents dans l'unité B d'un copolymère éthylène- ester de vinyle de départ tel que décrit plus haut. L'hydrolyse est effectuée par méthanolyse basique, et le taux de conversion des groupes ester de vinyle en groupe alcool vinylique est contrôlé par le volume de solution basique introduit. Ainsi en faisant varier le taux d'hydrolyse de l'étape a) du procédé, on fait donc varier le nombre de greffons Q branchés sur le copolymères final.

Cette étape d'hydrolyse est suivie d'une estérification totale ou partielle des groupes alcool vinyliques formés à l'étape précédente par un halogénure d'acide alpha halogéné de préférence le chlorure de 2-chloro-propionate ou selon une variante avec un halogénure d'acide alpha dihalogéné tel que le chlorure de dichloroacétyle.

Pour obtenir le polymère greffé de l'invention par réaction de polymérisation radicalaire par transfert d'atomes (ATRP), il s'est agit d'adapter le procédé décrit dans Garcia F. G. et al dans Eur Polym J. 2002, 38, 759 au problème particulier des copolymères d'éthylène et d'ester vinylique de départ généralement utilisés dans les carburants Diesel, dont la masse moléculaire varie approximativement de 5000 à 20.000.

De ce fait, le système catalytique utilisé dans l'invention comprend un halogénure d'un métal appartenant au groupe des métaux de transition, de préférence un halogénure de cuivre, ou encore de préférence le CuBr. En effet on a pu noter que la polymérisation est plus rapide avec le CuBr qu'avec le CuCl.

Le système catalytique utilisé dans l'invention comprend aussi un ligand azoté, de préférence une polyalkylamine de formule $H-[NR-(CH_2)_i-]_j-NH_2$(I), dans laquelle R est l'hydrogène ou un radical hydrocarboné comprenant de 1 à 10 atomes de carbone, i et j sont des entiers variant de 2 à 10, de préférence de 2 à 5. De préférence, la polyamine est le pentaméthyldiethylènetriamine (PMEDTA).

Ainsi la combinaison CuBr/ PMEDTA donne les meilleurs résultats et permet d'obtenir un meilleur amorçage et un meilleur contrôle de la polymérisation, notamment une distribution de taille plus fine.

Le greffage sur le copolymère activé est ensuite effectué par ATRP (Polymérisation Radicalaire par Transfert d'Atome) en présence d'un système catalytique comprenant un métal de transition et un ligand azoté. Durant cette étape, on effectue la polymérisation contrôlée d'un monomère d'ester vinylique contenant de 1 à 30 carbones dans sa chaîne, de préférence acrylique au niveau des sites d'amorçages porteurs d'un halogène. Cette polymérisation sur le site d'amorçage permet le greffage des motifs polyesters ou plus particulièrement des motifs polyacrylates. Cette ,étape a été optimisée et adaptée par rapport à celle décrite par Garcia pour tenir compte des structures et des propriétés des polyacrylates utilisés dans l'invention.

Ainsi le système catalytique utilise de préférence du CuBr pour augmenter la vitesse de réaction et faciliter les échanges. Le système catalytique utilise aussi de préférence le pentaméthyldiethylènetriamine (PMEDTA) pour obtenir un meilleur amorçage et un meilleur contrôle de la polymérisation, notamment une distribution de taille plus fine. Cette réaction s'effectue avantageusement dans un solvant aromatique, de préférence le toluène, à une température comprise entre 30°C et 120°C, pendant 1 à 10 h, de préférence 3h à 80°C, Le ratio molaire amorceur/CuBr/ligand variant autour de la stoechiométrie.

Selon une variante, on peut aussi obtenir les polymères greffés selon l'invention en utilisant un procédé classique de polymérisation par voie radicalaire en présence d'un initiateur de radicaux sur le copolymère activé et porteur de sites d'amorçage. Cette variante est particulièrement intéressante en cas de mise en oeuvre à l'échelle industrielle bien que le contrôle de la polymérisation et des longueurs de chaînes soit plus difficile à maîtriser que dans le procédé ATRP.

Selon une autre variante, on peut aussi obtenir les polymères greffés selon l'invention en effectuant un couplage direct, sur les groupes alcool d'un copolymère partiellement hydrolysé tel que décrit plus haut, d'un polyacrylate fonctionnalisé de formule $TOC-(CH_2-CHCOOR)_{p1}-$ dans laquelle p1 et R sont tels que défini plus haut et T représente un halogène en particulier le Cl ou un groupe OH. Il s'agit d'une estérification à température ambiante en présence d'une amine de type pyridine dans un rapport stoechiométrique.

<u>Description des monomères vinyliques substitués</u>.

La polymérisation au niveau des sites d'amorçages porteurs soit d'un radical libre, soit d'un halogène, s'effectue avec des monomères vinyliques substitués de deux types :

On utilise de préférence un monomère de formule M1 $CH_2$=CZCOOR, dans lequel Z représente un hydrogène ou un $CH_3$, le groupe R représente un groupe alkyle linéaire ou ramifié, saturé ou insaturé en $C_1$-$G_{30}$, c'est-à-dire des esters méthacryliques et/ou acryliques qui donneront une fois polymérisés des polyméthacrylates ou polyacrylates.

Le monomère M1 ester méthacrylique et/ou acrylique est choisi parmi les composés dont le groupement R comprend de 1 à 30 atomes de carbone pouvant contenir des motifs mono ou poly aromatiques, de préférence 2 à 20 atomes de carbone de préférence encore de 4 à 18 atomes de carbone, ou encore de 6 à 15 atomes de carbone, ou encore de 6 à 12 atomes de carbone. Les monomères M1 d'esters préférés sont choisis parmi le poly (2-éthylhexylacrylate), le polyacrylate de lauryle, le poly (2-éthylhexylacrylate) étant particulièrement préféré.

On utilise aussi un monomère de formule M2 $CH_2$=CZOCOR, dans lequel Z représente un hydrogène ou un $CH_3$, le groupe R représente un groupe alkyle linéaire ou ramifié, saturé ou insaturé en $C_1$-$C_{30}$. De préférence, le groupe R représente ici dans M2 un groupe alkyl ramifié en $C_5$ à $C_{15}$ dans lequel la ramification est située en n'importe quel point du radical alkyl, de préférence en position 2 ou 3 de la chaîne alkyle, de préférence de manière à obtenir un carbone tertiaire. De préférence le groupe OCOR est choisi parmi les groupes pivalate, isopentanoate, isohexanoate, 2-ethylhexanoate, isononanoate, isodécanoate, isotridécanoate, néononanoate, néodecanoate et néoundécanoate.

Grâce à la présence des groupes polaires, ces monomères vont créer des greffons polymères capables de venir bloquer la croissance des cristaux de paraffine. Par ailleurs, ces greffons peuvent aussi favoriser la formation de nouveaux germes et aussi apporter un effet dispersant, propriétés intéressantes pour la tenue à froid.

Ces monomères d'esters ont été choisis car ils conduisent à des polymères de faible température de transition vitreuse Tg supérieure à -80°C, de préférence comprise de -80°C à - 50°C. Leur groupement alkyle n'est pas trop long et va de 1 à 15 carbones. De ce fait ils peuvent contribuer à baisser la viscosité du copolymère final.

<u>Structure et propriétés des polymères d'éthylène et d'ester vinyliques greffés obtenus dans l'invention.</u>

Le nombre de greffons introduits dépend du nombre de sites amorceurs généré avant l'étape de greffage.

La taille ou la longueur des greffons définie par la valeur de p (p1 dans l'unité Q1 ou p2 dans l'unité Q2), est

contrôlée par le nombre de sites amorceurs présents dans le polymère activé et le taux de monomère d'ester introduit à l'étape de greffage. A taux constant de monomères d'ester, plus le nombre de site est important, plus la taille du greffon sera faible et inversement plus le nombre de site est faible, plus la taille du greffon sera importante.

Les masses molaires, mesurées par GPC, des copolymères selon l'invention sont supérieures à 10.000 $g.mol^{-1}$, de préférence comprises entre 10.000 et 40.000 $g.mol^{-1}$ ou encore comprise de 10.500 à 30.000 $g.mol^{-1}$, de préférence encore comprise entre 12.000 et 20.000 $g.mol^{-1}$.

Selon l'invention, les copolymères d'éthylène et d'ester de vinyle greffés, de masse molaire supérieure à 10.000 g.mol-1comprennent :

a) une unité dérivée de l'éthylène de formule A - (CH2-CH2)n- ;
b) au moins une unité de formule B : - (CH2-CHOCOR1)m-x- dans laquelle R1 est au moins un groupe choisi parmi les groupes alkyl linéaire ou ramifié en C1-C15 ;
c) une unité de formule C : - (CH2-CHOH)x1- ;
d) au moins une unité de formule D : - (CH2-CHG)x2- ou de formule D' -CH2C(OCOCH3)Q)x2- dans laquelle G représente un groupe de formule G1 ou G2 ou G3 où :

G1 est représenté par la formule -OCOCHCH3Q- ;
G2 est représenté par la formule -OCOCH2Q- ;
G3 est représenté par la formule -OCOCH2SQ- ;

dans lesquels Q représente

- soit une unité de formule Q1 -(CH2-CZCOOR)p1-Xq où ;
- soit une unité de formule Q2-(CH2-CZOCOR)p2-Xq où ;

où X représente un halogène, de préférence Br ou I, q varie de 0 à 1, Z représente un hydrogène ou un $CH_3$, R représente un groupe alkyle linéaire ou ramifié, saturé ou insaturé en $C_1$-$C_{30}$, de préférence en $C_4$-$C_{15}$, avantageusement en $C_6$-$C_{15}$ et encore plus avantageusement en $C_6$-$C_{12}$, et plus particulièrement le 2-éthylhexylacrylate ; copolymère dans lequel :

n est compris entre 48 et 643, et préférentiellement entre 79 et 515
m est compris entre 5 et 105, et préférentiellement entre 10 et 71
x ($x = x_1 + x_2$) est compris entre 0,25 et 52, et préférentiellement entre 0,5 et 36

$x_1$ est compris entre 0 et 0,95x, de préférence $x_1 = 0$
$x_2$ est compris entre 0,05x et x, de préférence $x_2 = x$
$p_1$ varie de 1 à 800, et préférentiellement entre 1 et 50.
$p_2$ varie de 1 à 100, et préférentiellement de 1 à 6.

Le% en moles des unités A dans le polymère est de 29 à 97%mol, de préférence 54 à 90%mol ou bien de manière équivalente le% en poids des unités A dans le polymère est de 7 à 81% masse, de préférence 20 à 62%w masse ;
Le% en moles des unités B dans le polymère est de 1 à 20%mol de préférence 3,5 à 11%mol ou bien de manière équivalente le% en poids des unités B dans le polymère est de 1 à 64% masse, de préférence 4 à 25% masse;
Le% en moles des unités C dans le polymère est de 0 à 10%mol, de préférence 0%mol ou bien de manière équivalente le% en poids des unités C dans le polymère est de 0 à 7% masse, de préférence 0% masse ;
Le% en moles des unités D dans le polymère est de 0,6 à 64%mol de préférence 2,3 à 42%mol ou bien de manière équivalente le% en masse des unités D dans le polymère est de 10 à 85% masse, de préférence 16 à 75% masse ;
Le% en moles des unités Q dans D : de 8,2 à 99,9%mol de préférence de 35 à 98,7%mol ou bien de manière équivalente le% en masse des unités Q dans D : de 30 à 99,9% masse de préférence de 50 à 99,3% masse.

Propriétés :

Le greffage facilite la solubilité des copolymères dans les hydrocarbures. Dans le cas des distillats moyens additivés avec les copolymères de l'invention, ceci permet d'améliorer les caractéristiques de filtrabilité TLF mesurée selon la procédure IP387. En effet la meilleure solubilité du polymère greffé évite que la partie insoluble du copolymère colmate le filtre (en général de diamètre 1,6 micron) et permet de mesurer des valeurs de FBT (Filter Blocking Tendency) inférieures à celles du copolymère initial. Cette amélioration de la FBT est constatée quelque soit la quantité de polymère greffée (quelque soit le% en moles de l'unité Q dans l'unité D).

Dans le cas des EVA à faibles de taux de VA (inférieure à 32% en masse), son greffage permet de modifier son comportement rhéologique en solution concentrée, par exemple en solution à 70% en masse de polymère, dans une coupe aromatique de pétrole. En effet cette solution concentrée d'EVA présente un comportement thixotrope à 40°C avec des valeurs dé viscosité élevée aux faibles gradients de cisaillement c'est-à-dire un seuil d'écoulement élevé. Le greffage confère à ce type de solution concentrée de copolymère EVA un comportement newtonien avec des valeurs de viscosité inférieures par rapport à l'EVA initial, surtout aux faibles taux de cisaillement (≤ 10 s-1).

Lorsque le taux de VA dépasse 32% en masse, le copolymère de départ en solution à 70% en masse de polymère, dans une coupe aromatique de pétrole retrouve un comportement newtonien et le greffage n'améliore plus la rhéologie du copolymère.

Dans tous les cas, indépendamment des variations du comportement rhéologique, le greffage apporte une amélioration des propriétés de solubilité des polymères qui sont favorables à la manipulation.

Ceci est aussi favorable à la préparation de solutions de polymère plus concentrées.

Description des solutions concentrées d'additifs selon l'invention.

A partir des copolymères greffés selon l'invention, on peut préparer des solutions concentrées de polymère, en particulier des solutions contenant de 50 à 80% en poids, de préférence de 60 à 70% en poids de polymère dans un solvant, tel que les hydrocarbures aliphatiques ou aromatiques. Ces solutions malgré leur forte concentration gardent une viscosité acceptable dans les gammes nécessaires aux manipulations usuelles des additifs d'hydrocarbures.

Description des distillats, carburants et fiouls comprenant les additifs selon l'invention.

Les copolymères selon l'invention sont ajoutés en tant qu'additifs de filtrabilité à des distillats, des carburants et des fiouls.

Les distillats comprennent ainsi au moins une partie majeure d'une coupe hydrocarbonée de type distillat moyen de teneur en soufre inférieur à 5000 ppm de préférence inférieur à 500 ppm, et plus préférentiellement inférieur à 50 ppm, et d'une partie mineure d'au moins un additif bifonctionnel de filtrabilité et d'écoulement selon l'invention.

Ces distillats sont représentés par les distillats de température d'ébullition comprise entre 150 et 450°C, de température de cristallisation commençante Tcc supérieure ou égale à -5°C, de préférence comprise entre -5°C et +10°C, et comprennent les distillats de distillation directe, les distillats sous vide, les distillats hydrotraités, les distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (biomass to liquid) de la biomasse végétale ét/ou animale, prise seule ou en combinaison, et les esters d'huiles végétales et animales ou leurs mélanges.

Bien entendu, la présente invention n'est pas limitée aux exemples et aux modes de réalisation décrits et représentés, mais elle est susceptible de nombreuses variantes accessibles à l'homme de l'art.

Exemple de préparation des polymères greffés :

Deux grades de copolymère d'éthylène et d'acétate de vinyle EVA de départ ont été testés et sont référencés ci-après P1 et P2 :

P1 correspond au polymère de départ comprenant les unités A dans laquelle n = 130 et B représenté par la formule $-(CH_2\text{-}CHOCOR_1))_m-$ dans laquelle m = 16 et $R_1$ est $CH_3$.

P2 correspond au polymère de départ comprenant les unités A dans laquelle n = 125 et B représenté par la formule $-(CH_2\text{-}CHOCOR_1)_m-$ dans laquelle m = 18 et $R_1$ est $CH_3$.

Procédé par ATRP :

On opère comme dans les deux premières étapes comme dans le mode opératoire des deux premières étapes décrites par Garcia F. G. et al dans Eur Polym J. 2002, 38, 759*,* correspondant à l'hydrolyse et l'estérification des sites OH. Mais pour la polymérisation ATRP, au lieu d'utiliser le couple catalytique CuCl/Bipyridine, on utilise le couple CuBr/PMDETA.

Exemple 1.

Selon le procédé décrit dans le schéma ci dessous, le greffage a été réalisé à partir de l'EVA. Le suivi du greffage a été réalisé par RMN du proton.

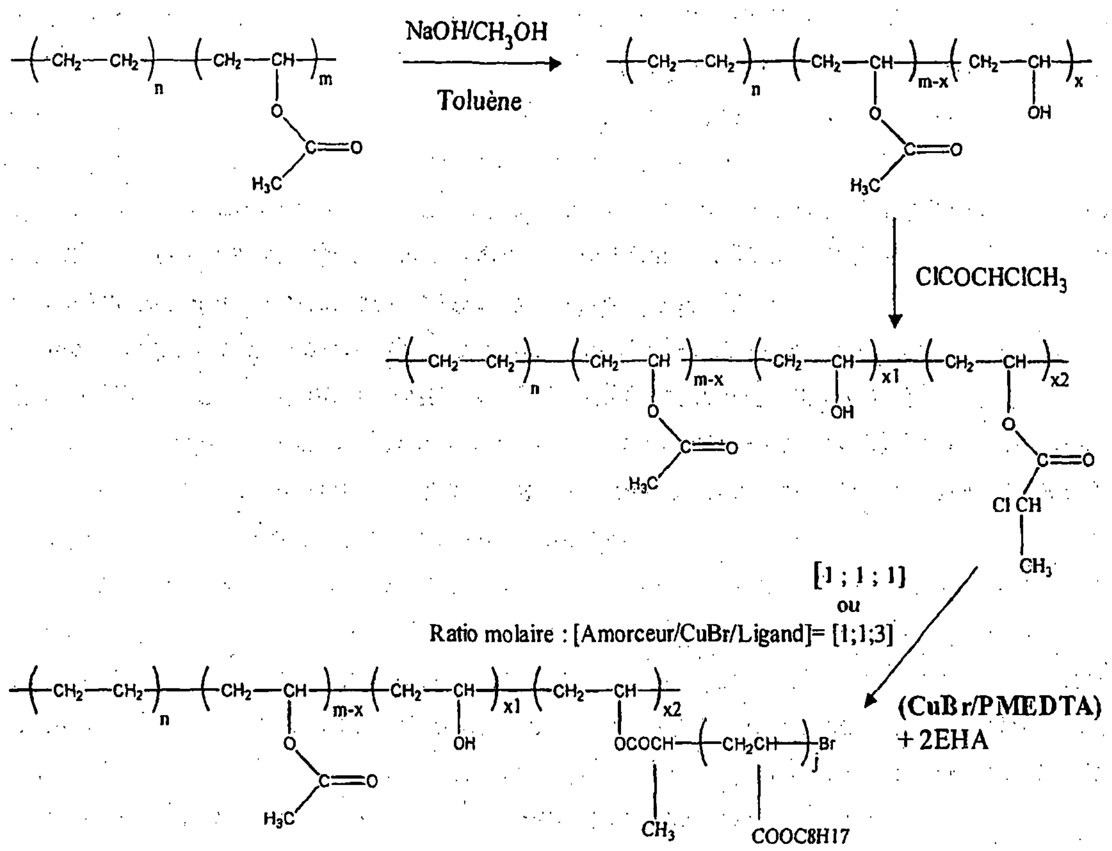


1) La première étape est une hydrolyse effectuée par méthanolyse basique avec une solution de soude à 10% en masse de soude dans le méthanol. Le taux de conversion des groupes acétate de vinyle en groupe alcool vinylique est controlé par le volume de solution basique introduit.

Ainsi en faisant varier le taux d'hydrolyse on fait donc varier le nombre de greffons polyacrylate.

2) la deuxième étape est une estérification des groupes OH par le chlorure de chloracétyle. Le taux d'estérification des fonctions OH est contrôlé par la quantité de dérivé chloré introduite l'objectif étant de limiter la concentration en fonction OH on introduira au moins un équivalent de chlorure de chloracétyle par fonction OH: ainsi lorsque deux équivalents de dérivé chloré sont introduits l'estérification est totale en présence de triéthylamine (sans triéthylamine ou avec une quantité de dérivé chloré inférieure à la stoechiométrie, la réaction est partielle.

3) L'étape ATRP de Polymérisation Radicalaire par Transfert d'atome a été optimisée et adaptée par rapport à celle décrite par Garcia pour augmenter le taux de conversion des monomères et obtenir une distribution des tailles plus étroite.

Cette étape, qui utilise la réaction du système CuBr et PMEDTA avec le macroamorceur obtenu à l'étape 2) permet d'obtenir des réactions d'échanges avec des taux de conversion du monomère de 84,5% en 5h (mesurées par CPV = chromatographie en phase vapeur), et des distributions des tailles des polymères obtenus de 1,18 (mesurées en CPV).

Un essai comparatif avec le système catalytique décrit par Garcia (CuCl/bipy) a montré que les taux de conversion des monomères sont plus faibles (61,5% en 22h) et les distributions des tailles des polymères obtenus sont plus larges (1,59).

Le mode opératoire ci-dessus effectué avec 2 éthyle-hexyle-acrylate (2EHA) en tant que monomère vinylique substitué de formule M1 $CH_2$=CZCOOR dans laquelle R est le groupe 2 éthyle-hexyle a été reproduit avec les monomères vinyliques substitués M1 dans lesquels le groupe R est le butyle, le lauryle, ou différents mélanges contenant des groupes tridécyle, tetradécyle, pentadécyle, hexadécyle, eicosyle, stéraryle.

Lorsque l'on opère par voie radicalaire simple, le polymère de départ est solubilisé dans un solvant aromatique (coupe kérosène par exemple) à une température de 90°C sous agitation. Ensuite en tenant compte de la température de décomposition de l'initiateur utilisé et en maintenant le milieu réactionnel sous gaz inerte (azote ou argon) on introduit à une vitesse constante le monomère et l'initiateur (peroxyde). En général la proportion de peroxyde est de 0.5 à 5% en masse par rapport au monomère à polymériser.

Lorsque l'on opère par voie radicalaire avec un macro-agent de transfert de type dérivé soufré, on hydrolyse

partiellement les groupes VA, puis on estérifie avec de l'acide mercapto acétique : on obtient un EVA modifié mercapto qui est utilisé comme un agent de transfert de chaîne dans la polymérisation de l'acrylate initialisée par l'AIBN.

Lorsque l'on opère par voie radicalaire avec un macro-agent de transfert avec dérivé halogéné on effectue tout d'abord la préparation d'un méthylène -vinyl chloroacétate par transestérification de l'EVA et de l'acide chloroacétique en présence de sulfate de mercure à température ambiante. Puis on obtient l'ethylène vinyl iodoacétate en faisant réagir l'éthylène vinyl chloroacetate avec de l'iodure de potassium (KI).

Enfin on effectue la polymérisation du monomère acrylate initialisée par l'AIBN.

On pourra aussi se référer au procédés décrits par Garcia F. G. et al, Polym. Int. 2002, 51, 1340-1347 ou par Teodorescu M. et al, Reactive&Functional Polymers 2004, 61, 387-395.

Exemple 2 : Produits préparés.

Les Masses molaires des produits préparés sont mesurées par GPC étalonnée standards Polystyrène est sont toutes comprises entre 10 000 et 30 000 g.mol-1.

Les caractéristiques des produits préparés sont fournies dans le tableau 1.

Tableau 1

| ref | polymère de départ | nature du greffage | polymère greffé | | | | |
|---|---|---|---|---|---|---|---|
| | | | %mol unité A (n) | %mol unité B (m-x) | %mol unité C (x1) | %mol unité D (x2) | %mol unité Q1 dans D (p1) |
| **1** | **P1** | **aucun** | **88,8 (130)** | **11,2(16)** | **0 (0)** | **0 (0)** | **0 (0)** |
| 2 | P1 | 2EHA | 79,7 (130) | 8,9 (14,2) | 0 (0) | 11,4 (1,8) | 94,9 (22) |
| 3 | P1 | 2EHA | 81,4 (130) | 5,6 (8,7) | 0 (0) | 12,9 (7,3) | 83,4 (6) |
| 4 | P1 | 2EHA | 84 (130) | 9,2 (14) | 0 (0) | 6,7 (2) | 88 (7,4) |
| 5 | P1 | 2EHA | 86,9 (130) | 8,2 (12) | 0 (0) | 4,95 (4) | 69,4 (3) |
| 6 | P1 | 2EHA | 80,4 (130) | 7,6 (12) | 0 (0) | 12 (4) | 87,4 (8,4) |
| 7 | P1 | 2EHA | 80,5 (130) | 5,6 (8) | 2,3 (4) | 11,6 (4) | 87,9 (8) |
| 8 | P1 | butyl acrylate | 82,8 (130) | 8,8 13,4) | 0 (0) | 8,45 (2,6) | 89,1 (8) |
| 9 | P1 | lauryl acrylate | 85,2 (130) | 9 (13,4) | 0(0) | 5,8 (2,6) | 81,3 (4,4) |
| 10 | P1 | méthacrylate C12-C15 | 87 (130) | 9,6 (14) | 0(0) | 3,4 (2) | 75,2 (2,9) |
| 11 | P1 | méthacrylate C16-C18 | 86,3 (130) | 9,2 (13,4) | 0(0) | 4,6 (2,6) | 75,8 (3,1) |
| 12 | P1 | acrylate C18-C22 | 84,9 (130) | 10,8 (13,4) | 0(0) | 4,3 (2,6) | 76,3 (3) |
| 13 | P1 | copo (2EHA/MA C12-C15) | 77,7 (130) | 8,6 (14) | 0(0) | 13,7 (2) | 91,5 (11) |
| 14 | P1 | veova10 | 86,6 (130) | 9,5 (13,7) | 0(0) | 3,9 (2,3) | 78,6 (3,8) |

(suite)

| ref | polymère de départ | nature du greffage | polymère greffé | | | | |
|---|---|---|---|---|---|---|---|
| | | | %mol unité A (n) | %mol unité B (m-x) | %mol unité C (x1) | %mol unité D (x2) | %mol unité Q1 dans D (p1) |
| **15** | **P2** | **aucun** | **87,5 (124)** | **12,5 (18)** | **0 (0)** | **0 (0)** | **0 (0)** |
| 16 | P2 | 2EHA | 81,6 (124) | 9,9 (15,3) | 0(0) | 8,4 (2,7) | 87,2 (7) |
| 17 | P2 | 2EHA | 74,4 (124) | 9,1 (15,3) | 0(0) | 16,5 (2,7) | 93,9 (15) |
| 18 | P2 | 2EHA | 77,5 (124) | 7,5 (12,2) | 0(0) | 15 (5,8) | 85,7 (5,9) |
| 19 | P2 | 2EHA | 50,5 (124) | 7,8 (12,2) | 0 (0) | 11,7 (5,8) | 81,3 (3,3) |
| $x = x_1 + x_2$ | | | | | | | |

La valeur de p1 correspond au degré de polymérisation de l'unité Q1 dans D.
Les échantillons 1 et 15 sont les échantillons de référence pour chacun des grades d'EVA testés P1 ou P2.
Les échantillons 2 et 3 ont la même quantité de polyacrylate mais pas le même nombre de greffons :

L'échantillon 3 a quatre fois plus de greffons que l'échantillon 2, donc des greffons 4 fois plus courts, puisqu'on est à taux de polyacrylate constant.

Parmi les échantillons greffés 2EHA (2 à 7), les échantillons 4 et 5 contiennent moins de 2EHA polyacrylate que les autres (cf. colonne%mol unité D).
Les échantillons 8 à 12 ont des greffons polyacrylates avec une chaîne alkyle qui diffère.
L'échantillon 8 a des greffons poly(acrylate de butyle).
L'échantillon 9 a des greffons poly(acrylate de lauryle).
L'échantillon 10 a des greffons qui sont un mélange {poly(méthacrylate de lauryle) (20-30%), poly(méthacrylate de tridecyle) (25-35%), poly(méthacrylate de tetradecyle) (25-35%), et de poly(méthacrylate de pentadecyle) (15-25%)}.
L'échantillon 11 a des greffons qui sont un mélange {poly(méthacrylate de stearyle) (60-75%), poly(méthacrylate d'hexadécyle) (22-35%), poly(méthacrylate d'eicosyle) (< 2%)}.
L'échantillon 12 a des greffons qui sont un mélange de {poly(acrylate de stéaryle) (40-46%), poly(acrylate de eicosyle) (8-14%), poly(acrylate de behenyle) (42-48%)}.
L'échantillon 13 a des greffons mixtes 2EHA + mélange méthacrylate en C12-C15 = mélange {poly(méthacrylate de lauryle) (20-30%), poly(méthacrylate de tridecyle) (25-35%), poly(méthacrylate de tetradecyle) (25-35%), et de poly(méthacrylate de pentadecyle) (15-25%)}.
L'échantillon 14 est greffé avec du vinylneodécanoate.
Les échantillons 16 à 19 correspondent à des modifications du polymère P2 :
L'échantillon 18 a le même nombre de greffons comparé à l'échantillon 19, mais les greffons sont plus longs (car le taux de polyacrylate est plus fort dans l'échantillon 18 que dans l'échantillon 19).

Résultats.

Les essais d'efficacité en TLF, filtrabilité (FBT) et viscosité ont été effectués sur deux types de gazoles Gz1 et Gz2 dont les caractéristiques sont données dans le tableau 2.
Le polymère P2 de part sa structure présente une meilleure efficacité sur le Gz1 tandis que le polymère P1 est plus efficace sur le Gz2.

Tableau 2.

| référence | Gz1 | Gz2 |
|---|---|---|
| taux de Paraffines mesuré par LC/GC | | |
| <C13 | 4,53 | 2,05 |
| C13-C17 | 8,61 | 4,58 |
| C18-C23 | 5,47 | 4,64 |
| > C24 | 0,66 | 0,94 |
| TOTAL n-Paraffines (%masse) | 19,27 | 12,21 |
| TLF (°C) | -4 | 1 |
| PTE (°C) température de point d'écoulement | -12 | -6 |
| PT (°C) point de trouble | -4 | 2 |
| MV15 | 0,8327 | 0,8541 |
| Teneur en soufre ppm | 39,8 | 930 |
| Viscosité à 40°C mm2/s | 2,725 | 2,6348 |
| Cétane calculé D4737 | 50,1 | 44,8 |
| Teneur en aromatiques IP391 | | |
| Mono Aromatiques% | 22,7 | 26,6 |
| Di Aromatiques% | 6,2 | 9,1 |
| Poly Aromatiques% | 0,6 | 1,9 |
| TCC (°C)température de cristallisation commençante. | -7/-6,2 | -1,2 |
| Distillation D86 (°C) | | |
| Point Initial | 167,6 | 156,4 |
| T10 | 203 | 189,8 |
| T20 | 224,7 | 203,5 |
| T50 | 274,5 | 271,9 |
| T80 | 317,1 | 331,3 |
| T90 | 337,4 | 354,3 |
| T95 | 353,9 | 371,1 |
| Point Final | 356 | 373,4 |

Gz1 est un gazole dont le taux de soufre est inférieur à 50 ppm, contient moins de 0,7% en poids de n-paraffines dont le nombre de carbone est supérieur à 24 et une concentration en paraffines C18-C23 supérieure à 5%, il présente aussi une TCC inférieur à -5°C.

Gz2 est un gazole dont le taux de soufre est inférieur à 5000 ppm, contient plus de 0,7% en poids de n-paraffines dont le nombre de carbone est supérieur à 24 et présente un TCC supérieure à -5°C.

La TLF est mesurée selon la norme NF EN116.

Les polymères P1 et P2 présentent des paliers d'efficacité TLF à des concentrations proches de 140 ppm pour le Gz2 et proche de 210 ppm pour le Gz1. Les performances TLF des polymères modifiés ont été mesurées à ces deux concentrations de référence et comparées aux performances des polymères de départ.

La viscosité des polymères est mesurée sur une solution de polymère diluée avec 30%w de Solvarex 10 (coupe aromatique de pétrole) à 40°C, avec un rhéomètre à contrainte imposée en géométrie cône-plan (20 mm/2°) en titane, avec un piège à solvant.

La FBT (Filter Blocking Tendency) est mesurée par méthode IP 387 qui équivaut à la « mesure de la solubilité » de l'additif dans le gazole.

L'additif est bien solubilisé si FBT < 1,41.

Les résultats sont fournis dans le tableau 3.

Tableau 3.

| référence | distillats | TLF (à 140ppm) (°C) | TLF (à 210ppm) (°C) | FBT | viscosité (à 10s-1) (Pa.s) |
|---|---|---|---|---|---|
| **1** | **Gz1** | **-14** | **-16** | **10,05** | **5,9** |
| 2 | Gz1 | -17 | -18 | 1,05 | 3,6 |
| 3 | Gz1 | -15 | -16 | 1,05 | 0,98 |
| 4 | Gz1 | -14 | -16 | 1,11 | 5 |
| 5 | Gz1 | -15 | -16 | 1,06 | 2,5 |
| 6 | Gz1 | -17 | -18 | 1,05 | 2 |
| 7 | Gz1 | -13 | -18 | | |
| 8 | Gz1 | -8 | -13 | 1,18 | 3,7 |
| 9 | Gz1 | -12 | -15 | 1,01 | 0,8 |
| 10 | Gz1 | -13 | -14 | 1,03 | |
| 11 | Gz1 | -3 | -3 | 1,02 | 12,4 |
| 12 | Gz1 | -3 | -3 | 3,48 | 15,3 |
| 13 | Gz1 | -17 | -16 | 1,01 | |
| 14 | Gz1 | -8 | -12 | | 10 |
| **15** | **Gz1** | **-14** | **-17** | **3,88** | **1,9** |
| 16 | Gz1 | -15 | -17 | 1,06 | 2,5 |
| 17 | Gz1 | -13 | -17 | 1,05 | |
| 18 | Gz1 | -8 | -8 | 1,05 | 5 |
| 19 | Gz1 | -14 | -14 | 1,05 | 1,9 |
| | | | | | |
| 1 | Gz2 | -11 | -12 | | |
| 2 | Gz2 | -13 | -12 | | |
| 3 | Gz2 | 0 | -2 | | |
| 4 | Gz2 | -10 | -10 | | |
| 5 | Gz2 | -1 | -10 | | |
| 6 | Gz2 | -2 | -10 | | |
| 7 | Gz2 | 0 | -3 | | |
| 9 | Gz2 | -3 | -10 | | |
| 13 | Gz2 | -9 | -10 | | |
| 14 | Gz2 | -6 | -9 | | |

Les échantillons **1 et 15** sont les échantillons de référence pour chacun des grades d'EVA testés P1 ou P2.

A noter que le Gz2 compte tenu de ses caractéristiques est beaucoup plus «discriminant» que le Gz1 au niveau de l'efficacité en TLF.

Les échantillons 2 et 3 ont la même quantité de polyacrylate mais pas le même nombre de greffons :

L'échantillon 3 a quatre fois plus de greffons que l'échantillon 2, donc des greffons 4 fois plus courts, puisqu'on travaille à taux de polyacrylate constant.

En efficacité TLF, on voit que l'échantillon 2 est efficace dans les deux types de distillats (Gzl et Gz2) alors que l'échantillon 3 n'est efficace que dans le Gz1.

En effet, un taux de greffon trop élevé (% mole unité B > 7,5%mol) sur P1 modifie fortement la structure initiale du polymère de départ et engendre une dégradation de son efficacité qui est plus visible dans Gz2.

Ils sont tous deux bien solubles (FBT < 1,41).

L'échantillon 3 présente l'avantage, grâce à ses nombreux greffons, d'être beaucoup plus fluide que le polymère de départ P1.

Parmi les échantillons greffés 2EHA (2 à 7), les échantillons 4 et 5 contiennent moins de polyacrylate que les autres (cf. colonne%mol unité D) : on voit que même avec un taux de polyacrylate plus faible, les échantillons restent efficaces en TLF, en solubilité (FBT < 1,41) et en viscosité.

Si on regarde l'effet de la présence des unités C = échantillon 7, que l'on peut comparer à l'échantillon 6 (car ils ont le même nombre de greffons et la même quantité de polyacrylate) : on constate que la présence de ces unités C retarde l'efficacité en TLF dans le (échantillon 6 efficace dès 140ppm alors que le 7 est efficace à 210ppm) et surtout elle dégrade l'efficacité dans le Gz2.

Les échantillons 8 à 12 ont des greffons polyacrylates avec une chaîne alkyle qui diffère.

On peut les comparer à l'échantillon 2 qui a des greffons poly(acrylate de 2-ethyl hexyle).

On constate que l'échantillon 8 a une efficacité retardée en TLF dans le Gz1 et que les échantillons 11 et 12 ne sont pas du tout efficaces dans le Gz1. Ces échantillons dont la chaîne alkyle des acrylates greffés comprend plus de 15 atomes de carbone, n'agissent pas comme « nucléateurs » et vont plutôt agir en tant qu'additifs de point de trouble en solubilisant les paraffines.

Ainsi les échantillons les plus efficaces en TLF sont ceux ayant des greffons poly((méth)acrylate d'alkyle) avec une chaîne alkyle comprise entre C6 et C15. De plus, ils sont tous bien solubilisés (FBT < 1,41) sauf l'échantillon 12. La viscosité du polymère greffé est la plus faible avec les greffons de polyacrylate de 2-ethyl hexyle et le polyacrylate de lauryle. Les échantillons 11 et 12 contenant des greffons poly(méth)acrylate de n-alkyle plus cristallins sont plus visqueux. Le greffage de poly(méth)acrylate en C16-C22 ne permet pas de réduire la viscosité du copolymère de départ.

L'échantillon 13 est très efficace en TLF dans le Gz1 et dans le Gz2. Il est également très bien solubilisé (FBT < 1,41).

L'échantillon 14 est greffé avec du vinylneodécanoate : il a une efficacité retardée en TLF dans le Gz1 mais fonctionne bien dans le Gz2. Par contre il est plus visqueux que P1.

Parmi les échantillons 16 à 19, seul l'échantillon 18 ne fonctionne pas en TLF dans le Gz1: si on le compare à l'échantillon 19, il a le même nombre de greffons, mais a des greffons plus longs (car le taux de polyacrylate est plus fort dans le 18 que dans le 19). Il y a donc une taille de greffons à ne pas dépasser (i.e. un taux de polyacrylate à ne pas dépasser) pour un nombre de greffons donné.

Tous les échantillons sont bien solubles (FBT < 1,4), par contre on ne gagne pas en viscosité par rapport à P2.

On gagne en viscosité seulement pour des taux de cisaillement < 1.0 $s^{-1}$ avec l'échantillon 19 par exemple, qui est newtonien, contrairement à P2 qui est thixotrope (NB cette notion de thixotropie étant moins prononcée avec les polymères P1).

## Revendications

**1.** Copolymère d'éthylène et d'ester de vinyl greffé, de masse molaire supérieure à 10.000 $g.mol^{-1}$ comprenant :

a) une unité dérivée de l'éthylène de formule A - $(CH_2\text{-}CH_2)_n$- dans laquelle n est un nombre entier qui varie de 45 à 650 ;
b) au moins une unité de formule B : - $(CH_2\text{-}CHOCOR_1)_{m\text{-}x}$- dans laquelle m est un nombre entier qui varie de 5 à 110, et $R_1$ est au moins un groupe choisi parmi les groupes alkyl linéaire ou ramifié en $C_1$-$C_{15}$;
c) une unité de formule C : - $(CH_2\text{-}CHOH)_{x1}$- dans laquelle $x_1$ va de 0 à 0,95 x ;
d) au moins une unité de formule D : - $(CH_2\text{-}CHG)_{x2}$- ou de formule D'-$CH_2C(OCOCH3)Q)_{x2}$- dans laquelle $x_2$ est toujours différent de 0 et varie de 0,05 x à x, de préférence $x_2$ vaut x et G représente un groupe de formule G1 ou G2 ou G3 où

G1 est représenté par la formule -$OCOCHCH_3Q$-
G2 est représenté par la formule -$OCOCH_2Q$-
G3 est représenté par la formule -$OCOCH_2SQ$-

dans lesquels Q représente

- soit une unité de formule Q1 $-(CH_2-CZCOOR_{q1})_{p1}-X_q$ où $p_1$ varie de 1 à 800;
- soit une unité de formule Q2 $-(CH_2-CZOCOR_{q2})_{p2}-X_q$ où $p_2$ varie de 1 à 100;

où X représente un halogène, de préférence Br ou I, q varie de 0 à 1, Z représente un hydrogène ou un $CH_3$, $R_{q1}$ ou $R_{q2}$ représente un groupe alkyle linéaire ou ramifié, saturé ou insaturé en $C_1$-$C_{30}$, de préférence en $C_4$-$C_{15}$, avantageusement en $C_6$-$C_{15}$ et encore plus avantageusement en $C_6$-$C_{12}$, et plus particulièrement le 2-éthylhexylacrylate,

copolymère dans lequel
$x = x_1 + x_2$ et x varie de 0,25 à 55;
le% en moles des unités A dans le polymère est de 29 à 97% en moles;
le% en moles des unités B dans le polymère est de 1 à 20% en moles;
le% en moles des unités C dans le polymère est de 0 à 10% en moles ;
le% en moles des unités D ou D' dans le polymère est de 0,6 à 64% en moles et le% en moles des unités Q dans D ou D' est de 8,2 à 99,9% en moles.

**2.** Copolymère d'éthylène et d'ester de vinyl greffé selon la revendication 1, de masse molaires comprises de 10500 à 30000 $g.mol^{-1}$, comprenant :

a) une unité dérivée de l'éthylène de formule A - $(CH_2-CH_2)_n$- dans laquelle n est un nombre entier qui varie de 45 à 650, de préférence 75 à 520.
b) au moins une unité de formule B : - $(CH_2-CHOCOR_1)_{m-x}$- dans laquelle m est un nombre entier qui varie de 5 à 110, de préférence 10 à 75, et $R_1$ est au moins un groupe choisi parmi les groupes alkyl linéaire ou ramifié en $C_1$-$C_{15}$ ;
c) une unité de formule C : - $(CH_2-CHOH)_{x1}$- dans laquelle $x_1$ va de 0 à 0,95 x, de préférence $x_1$ vaut 0 ;
d) au moins une unité de formule D : - $(CH_2-CHG)_{x2}$- dans laquelle $x_2$ est toujours différent de 0 et varie de 0,05 x à x, de préférence $x_2$ vaut x et G représente un groupe de formule G1 $-OCOCHCH_3Q-$ dans lequel Q représente :

- soit une unité de formule Q1 $-(CH_2-CZCOOR_{q1})p_1-X_q$ $p_1$ varie de 1 à 800, de préférence de 1 à 50 ;
- soit une unité de formule Q2 $-(CH_2-CZOCOR_{q2})_{p2}-X_q$ $p_2$ varie de 1 à 100, de préférence de 1 à 10 ;

où X représente un halogène, de préférence Br, q varie de 0 à 1, Z représente un hydrogène ou un $CH_3$, $R_{q1}$ ou $R_{q2}$ représente un groupe alkyle linéaire ou ramifié, saturé ou insaturé en $C_1$-$C_{30}$, de préférence en $C_4$-$C_{15}$; avantageusement en $C_6$-$C_{15}$ et encore plus avantageusement en $C_6$-$C_{12}$, et plus particulièrement le 2-éthylhexylacrylate,

copolymère dans lequel
$x = x_1 + x_2$ et x varie de 0,25 à 55 de préférence de 0,5 à 40 ;
le% en moles des unités A dans le polymère est de 29 à 97% en moles, de préférence 54 à 90% en moles;
le% en moles des unités B dans le polymère est de 1 à 20% en moles de préférence 3,5 à 11% en moles;
le% en moles des unités C dans le polymère est de 0 à 10% en moles, de préférence 0% en moles;
le% en moles des unités D dans le polymère est de 0,6 à 64% en moles de préférence 2,3 à 42% en moles et le% en moles des unités Q dans D va de 8,2 à 99,9% en moles, de préférence de 35 à 98,7% en moles.

**3.** Polymère selon la revendication 1 ou 2 dans lequel Q représente une unité de formule Q1 $-(CH_2-CZCOOR_{q1})_{p1}-X_q$ dans laquelle q vaut 0, $p_1$ varie de 1 à 50, et de préférence $R_{q1}$ représente un groupement alkyle linéaire ou ramifié, saturé ou insaturé en $C_6$-$C_{15}$ de préférence en $C_6$-$C_{12}$, de préférence représente l'acrylate de 2-ethylhexyle et/ou de préférence Q représente une unité de formule Q2 $-(CH_2-CZOCOR_{q2})_{p2}-X_q$ dans laquelle q vaut 0, $p_2$ varie de 1 à 10, Z est H, et $R_{q2}$ représente un groupe alkyl ramifié en $C_5$ à $C_{25}$ de préférence en $C_5$ à $C_{15}$ dans lequel la ramification est située en n'importe quel point du radical alkyl, de préférence en position 2 ou 3 de la chaîne alkyle, de préférence de manière à obtenir un carbone tertiaire.

**4.** Polymère selon l'une des revendications 1 à 3 dans lequel le groupe $OCOR_{q2}$ est choisi parmi les groupes pivalate, isopentanoate, isohexanoate, 2-ethylhexanoate, isononanoate, isodécanoate, isotridécanoate, néononanoate, néodecanoate et néoundécanoate et/ou le radical $OCOR_{q2}$ provient des acides gras végétaux ou animaux dans lesquels le groupe $R_{q2}$ comprend des chaînes alkyles saturées ou insaturées, linéaires ou ramifiées en $C_8$ à $C_{25}$, de préférence en $C_{12}$ à $C_{15}$.

**5.** Polymère selon l'une des revendications 1 à 4 dans lequel l'unité de formule B représente

a) soit une unité de formule B' -($CH_2$-CHOCOR'$_1$)$_{m'-x}$ dans laquelle R'$_1$ est le groupe $CH_3$, m' varie de 10 à 75 ;
b) soit une unité de formule B" -($CH_2$-CHOCOR"$_1$)$_{m"-x}$ dans laquelle R"$_1$ est le groupe $C_2H_5$, m" varie de 10 à 75 ;
c) soit une unité de formule B"' -($CH_2$-CHOCOR"'$_1$))$_{m"'-x}$ dans laquelle R"'$_1$ est un groupe alkyl ramifié en $C_5$ à $C_{15}$ dans lequel la ramification est située en n'importe quel point du radical alkyl, de préférence en position 2 ou 3 de la chaîne alkyle, de préférence de manière à obtenir un carbone tertiaire, m"' varie de 10 à 75 ;
soit un mélange de celles-ci, de préférence le mélange des unités B' et B" ou des unités B' et B'" ou des unités B" et B"'.

**6.** Polymère selon l'une des revendications 1 à 5 dans lequel :

n=79à515;
l'unité de formule B représente une unité de formule B' -($CH_2$-CHOCOR'$_1$)$_{m'-x}$ dans laquelle R'$_1$ est le groupe $CH_3$, et m' varie de 10 à 71 ;
x varie de 0,5 à 36 avec $x_1$ = 0.
Q représente une unité de formule Q1 - ($CH_2$-CHCOOR)$_{p1}$-$X_q$ dans laquelle q vaut 0, p1 varie de 1 à 50, et R représente un groupe alkyle linéaire ou ramifié, saturé ou insaturé en $C_1$-$C_{30}$ ou de préférence en $C_4$-$C_{15}$ ;
le% en moles des unités A dans le polymère est de 54 à 90% en moles
le% en moles des unités B dans le polymère est de 3,5% à 11% en moles,
le% en moles des unités C dans le polymère est de 0% en moles
le% en moles des unités D dans le polymère est de 2,3% à 42% en moles et le% en moles des unités Q dans l'unité D est de 35% à 98,7% en moles.

**7.** Procédé de préparation des polymères greffés selon l'une des revendications 1 à 6 comprenant les étapes de :

i) fourniture d'un polymère d'éthylène et d'ester de vinyle de départ comprenant :

a) des unités dérivées de l'éthylène de formule A - ($CH_2$-$CH_2$)$_n$-
b) au moins une unité de formule B : - ($CH_2$-CHOCOR$_1$)$_m$- dans laquelle $R_1$ est au moins un groupe choisi parmi les groupes alkyl linéaires ou ramifiés en $C_1$-$C_{15}$, un groupe $CH_2SH$ ou $CH_2I$ ;
n et m variant dans des gammes de valeur telles que les masses moléculaires moyennes en nombre Mn du polymère de départ vont de 3000 à 20000g.mol$^{-1}$ ; puis

ii) introduction d'un initiateur de radicaux libres et réaction de polymérisation radicalaire au niveau des sites d'amorçages d'un monomère polymérisable de formule M1 $CH_2$=CZCOOR, ou bien de formule M2 $CH_2$=CZO-COR, monomère M1 ou M2 dans lequel Z représente un hydrogène ou un $CH_3$, le groupe R représente un groupe alkyle linéaire ou ramifié, saturé ou insaturé en $C_1$-$C_{30}$, réaction telle que le degré de polymérisation p1 du monomère M1 pour donner l'unité Q1 sur le site d'amorçage va de 1 à 800, ou bien le degré de polymérisation p2 du monomère M2 pour donner l'unité Q2 sur le site d'amorçage va de 1 à 100.

**8.** Procédé selon la revendication 7 de préparation des polymères greffés selon l'une des revendications 1 à 6 comprenant les étapes de :

j) fourniture d'un polymère d'éthylène et d'ester de vinyle de départ comprenant :

a) des unités dérivées de l'éthylène de formule A - ($CH_2$-$CH_2$)$_n$-
b) au moins une unité de formule B : - ($CH_2$-CHOCOR$_1$)$_m$- dans laquelle $R_1$ est au moins un groupe choisi parmi les groupes alkyl linéaires ou ramifiés en $C_1$-$C_{15}$;
n et m variant dans des gammes de valeur telles que les masses moléculaires moyennes en nombre Mn du polymère de départ vont de 3000 à 20000g.mol$^{-1}$; puis

jj) réaction d'hydrolyse partielle des esters d'alkyles présents dans l'unité B telle que le taux d'hydrolyse est inférieur ou égal à 50% des sites hydrolysables, de préférence inférieur à 20% des dits sites, puis
jjj) réaction d'estérification au moins partielle de ces sites par un halogénure d'acide halogéné de formule XOC-$CH_{2-j}X_j$-$CH_3$ dans laquelle j vaut 1 ou 2 et X représente un halogène de préférence Cl, telle que le taux d'estérification est supérieur à 50% de préférence 100%; puis
jjjj) réaction de polymérisation au niveau des sites d'amorçages porteurs d'un halogène, d'un monomère de formule M1 $CH_2$=CZCOOR, ou bien d'un monomère de formule M2 $CH_2$=CZOCOR, monomère dans lequel Z représente un hydrogène ou un $CH_3$, le groupe R représente un groupe alkyle linéaire ou ramifié, saturé ou

insaturé en $C_1$-$C_{30}$, réaction telle que le degré de polymérisation p1 du monomère M1 pour donner l'unité Q1 sur le site d'amorçage va de 1 à 50, ou bien le degré de polymérisation p2 du monomère M2 pour donner l'unité Q2 sur le site d'amorçage va de 1 à 6.

**9.** Procédé de préparation selon la revendication 8 dans lequel l'étape jjjj) est effectuée par polymérisation radicalaire par transfert d'atomes (ATRP) en présence d'un système catalytique comprenant un métal de transition, de préférence un halogénure de cuivre, tel que le CuBr, et un ligand azoté ou l'étape jjjj) est effectuée par voie radicalaire en présence d'un initiateur de radicaux.

**10.** Procédé de préparation selon la revendication 8 dans lequel l'étape jj) est suivie d'une étape kkk) de greffage d'un polyacrylate fonctionnalisé de formule TOC-(CH2-CHCOOR)$p_1$- dans laquelle p1 et R sont tels que défini précédemment et T représente un halogène en particulier le Cl ou un groupe OH, sur les groupes alcool du copolymère partiellement hydrolyse obtenu à l'étape jj).

**11.** Procédé selon l'une des revendications 7 à 10 dans lequel le taux de greffage en poids des unités de copolymères Q1 ou Q2 obtenues par polymérisation des monomères de type M1 ou M2 sur lesdits sites d'amorçage est de 10 à 80% de préférence de 15 à 70%.

**12.** Procédé selon l'une des revendications 7 à 11 pour la préparation des copolymères tels que définis dans l'une quelconque des revendications 1 à 6.

**13.** Solution concentrée d'un polymère selon l'une des revendications 1 à 6 dans un distillat hydrocarboné, de préférence à une concentration de plus de 50% en poids, de préférence de 60 à 80% en poids.

**14.** Utilisation de la solution concentrée selon la revendication 13 comme additif de filtrabilité et d'écoulement pour les hydrocarbures de type distillats moyens, de préférence dans les hydrocarbures dont la teneur en n-paraffines contenant plus de 18 atomes de carbone supérieure à 4% en poids ou comme base pour les carburants pour moteurs Diesel et les fiouls domestiques.

**15.** Additif bifonctionnel pour abaisser la filtrabilité et l'écoulement à basse température des hydrocarbures liquides comprenant un polymère greffé selon l'une des revendications 1 à 6.

**16.** Distillat moyen comprenant au moins une partie majeure d'une coupe hydrocarbonée de type distillat moyen de teneur en soufre inférieur à 5000 ppm de préférence inférieur à 500 ppm, et plus préférentiellement inférieur à 50 ppm, et d'une partie mineure d'au moins un additif bifonctionnel de filtrabilité et d'écoulement selon la revendication 15, de préférence dans lequel la partie majeure est constituée par les distillats de température d'ébullition comprise entre 150 et 450°C, de température de cristallisation commençante Tcc supérieure ou égale à -5°C, de préférence comprise entre -5°C et +10°C, comprenant les distillats de distillation directe, les distillats sous vide, les distillats hydrotraités, les distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (biomass to liquid) de la biomasse végétale et/ou animale, prise seule ou en combinaison, et les esters d'huiles végétales et animales ou leurs mélanges.

**17.** Distillat selon la revendication 16 dont la teneur en n-paraffines contenant plus de 18 atomes de carbone supérieure à 4% en poids, de préférence dont la teneur en poids de n-paraffines dont le nombre de carbone est supérieur à 24, est supérieure ou égale à 0,7%, de préférence dont la teneur en poids de n-paraffines ayant un nombre de carbone variant de C24 à C40 varie de 0,7 à 2%.

**18.** Carburant Diesel comprenant de 0 à 500 ppm de soufre et comprenant au moins un distillat selon l'une des revendications 16 ou 17, de préférence dans lequel la partie mineure comprend de 10 à 5000 ppm d'au moins un additif bifonctionnel de filtrabilité et d'écoulement selon la revendication 15 éventuellement en mélange d'autres additifs détergents, dispersants, désémulsifiants, anti-mousses, biocide, réodorants, améliorants de cétane, anti-corrosions, modificateurs de friction, améliorants de lubrifiance, de combustion, de point de trouble, de point d'écoulement, d'antisédimentation et de conductivité.

**19.** Fioul de chauffage comprenant de 0 à 5000 ppm de soufre comprenant au moins un distillat selon l'une des revendications 16 ou 17.

**20.** Fioul lourd comprenant au moins un distillat selon l'une des revendications 16 ou 17.

**Patentansprüche**

**1.** Gepfropftes Vinylester- und Ethylen-Copolymer mit einer Molmasse größer 10.000 $g.mol^{-1}$, umfassend:

a) eine Einheit, abgeleitet von dem Ethylen mit der Formel A - $(CH_2\text{-}CH_2)n$-, wobei n eine ganze Zahl ist, die von 45 bis 650 variiert;
b) mindestens eine Einheit mit der Formel B: $-(CH_2\text{-}CHOCOR_1)_{m\text{-}x}$-, wobei m eine ganze Zahl ist, die von 5 bis 110 variiert, und $R_1$ mindestens eine Gruppe ist, ausgewählt aus den linearen oder verzweigten $C_1$-$C_{15}$-Alkylgruppen;
c) eine Einheit mit der Formel C: $-(CH_2\text{-}CHOH)_{x1}$-, wobei x1 von 0 bis 0,95 x geht;
d) mindestens eine Einheit mit der Formel D: $-(CH_2\text{-}CHG)_{x2}$- oder der Formel D' -

$CH_2C(OCOCH_3)Q)_{x2}$-,

wobei

✓ x2 immer ungleich 0 ist und von 0,05 x bis x variiert,
✓ x2 bevorzugt gleich x ist und
✓ G für eine Gruppe mit der Formel G1 oder G2 oder G3 steht,

worin

- G1 für die Formel $-OCOCHCH_3Q$- steht,
- G2 für die Formel $-OCOCH_2Q$- steht,
- G3 für die Formel $-OCOCH_2SQ$- steht,

wobei Q

◦ entweder für eine Einheit mit der Formel Q1 $-(CH_2\text{-}CZCOOR_{q1})_{p1}\text{-}X_q$ steht, worin p1 von 1 bis 800 variiert;
◦ oder für eine Einheit mit der Formel Q2 $-(CH_2\text{-}CZOCOR_{q2})_{p2}\text{-}X_q$ steht, worin p2 von 1 bis 100 variiert;

wobei

X für ein Halogen, bevorzugt Br oder I, steht,
q von 0 bis 1 variiert, Z für einen Wasserstoff oder $CH_3$ steht, $R_{q1}$ oder $R_{q2}$ für eine lineare oder verzweigte, gesättigte oder ungesättigte $C_1$-$C_{30}$-, bevorzugt $C_4$-$C_{15}$-; vorteilhafterweise $C_6$-$C_{15}$- und noch stärker bevorzugt $C_6$-$C_{12}$-Alkylgruppe und insbesondere 2-Ethylhexylacrylat stehen,

Copolymer, wobei

• x = x1 + x2 und x von 0,25 bis 55 variiert;
• der Mol-% der Einheiten A in dem Polymer bei 29 bis 97 Mol-% liegt;
• der Mol-% der Einheiten B in dem Polymer bei 1 bis 20 Mol-% liegt;
• der Mol-% der Einheiten C in dem Polymer bei 0 bis 10 Mol-% liegt;
• der Mol-% der Einheiten D oder D' in dem Polymer bei 0,6 bis 64 Mol-% liegt und der Mol-% der Einheiten Q in D oder D' bei 8,2 bis 99,9 Mol-% liegt.

**2.** Gepfropftes Vinylester und Ethylen-Copolymer nach Anspruch 1 mit einer Molmasse im Bereich von 10.500 bis 30.000 $g.mol_{-1}$, umfassend:

a) eine Einheit, abgeleitet von dem Ethylen mit der Formel A -(CH2-CH2)n-, wobei n eine ganze Zahl ist, die von 45 bis 650, bevorzugt von 75 bis 520 variiert;
b) mindestens eine Einheit mit der Formel B: -(CH2-CHOCOR1)m-x-, wobei m eine ganze Zahl ist, die von 5 bis 110, bevorzugt von 10 bis 75 variiert, und R1 mindestens eine Gruppe ist, ausgewählt aus den linearen oder verzweigten C1-C15-Alkylgruppen;

c) eine Einheit mit der Formel C: -(CH2-CHOH)x1-, wobei x1 zwischen 0 und 0,95 x liegt, x1 bevorzugt gleich 0 ist;
d) mindestens eine Einheit mit der Formel D: -(CH2-CHG)x2-, wobei x2 immer ungleich 0 ist und von 0,05 x bis x variiert, x2 bevorzugt gleich x ist und G für eine Gruppe mit der Formel G1 -OCOCHCH3Q- steht, wobei Q für Folgendes steht:

- entweder für eine Einheit mit der Formel Q1 $-(CH_2\text{-}CZCOOR_{q1})_{p1}\text{-}X_q$, wobei p1 von 1 bis 800, bevorzugt von 1 bis 50 variiert;
- oder eine Einheit mit der Formel $Q_2$ $-(CH_2\text{-}CZOCOR_{q2})_{p2}\text{-}X_q$, wobei p2 von 1 bis 100, bevorzugt von 1 bis 10 variiert;

wobei:

X für ein Halogen, bevorzugt Br, steht, q von 0 bis 1 variiert, Z für einen Wasserstoff oder $CH_3$ steht, $R_{q1}$ oder $R_{q2}$ für eine lineare oder verzweigte, gesättigte oder ungesättigte $C_1$-$C_{30}$-, bevorzugt $C_4$-$C_{15}$-;vorteilhafterweise $C_6$-$C_{15}$- und noch stärker bevorzugt $C_6$-$C_{12}$-Alkylgruppe und insbesondere 2-Ethylhexylacrylat steht,

Copolymer, wobei

• x = x1 + x2 und x von 0,25 bis 55, bevorzugt von 0,5 bis 40 variiert;
• der Mol-% der Einheiten A in dem Polymer bei 29 bis 97 Mol-%, bevorzugt 54 bis 90 Mol-% liegt;
• der Mol-% der Einheiten B in dem Polymer bei 1 bis 20 Mol-%, bevorzugt 3,5 bis 11 Mol-% liegt;
• der Mol-% der Einheiten C in dem Polymer bei 0 bis 10 Mol-%, bevorzugt 0 Mol-% liegt;
• der Mol-% der Einheiten D in dem Polymer 0,6 bis 64 Mol-%, bevorzugt 2,3 bis 42 Mol-% liegt, der Mol-% der Einheiten Q in D bevorzugt von 8,2 bis 99,9 Mol-%, bevorzugt von 35 bis 98,7 Mol-% variiert.

**3.** Polymer nach Anspruch 1 oder 2, wobei Q für eine Einheit mit der Formel Q1 $-(CH_2\text{-}CZCOOR_{q1})_{p1}\text{-}X_q$ steht, wobei q gleich 0 ist, p1 von 1 bis 50 variiert, und $R_{q1}$ bevorzugt für eine lineare oder verzweigte, gesättigte oder ungesättigte $C_6$-$C_{15}$-, bevorzugt $C_6$-$C_{12}$-Alkylgruppe steht, bevorzugt für 2-Ethylhexylacrylat steht und/oder Q bevorzugt für eine Einheit mit der Formel Q2 - $(CH_2\text{-}CZOCOR_{q2})_{p2}\text{-}X_q$ steht, wobei q gleich 0 ist, p2 von 1 bis 10 variiert, Z gleich H ist und $R_{q2}$ für eine verzweigte $C_5$- bis $C_{25}$-, bevorzugt $C_5$- bis $C_{15}$-Alkylgruppe steht, wobei die Verzweigung an irgendeinem Punkt des Alkylradikals liegt, bevorzugt an Position 2 oder 3 der Alkylkette, um bevorzugt einen tertiären Kohlenstoff zu erhalten.

**4.** Polymer nach einem der Ansprüche 1 bis 3, worin die Gruppe $OCOR_{q2}$ ausgewählt ist aus den Pivalat-, Isopentanoat-, Isohexanoat-, 2-Ethylhexanoat-, Isononanoat-, Isodecanoat-, Isotridecanoat-, Neononanoat-, Neodecanoat- und Neoundecanoatgruppen und/oder das Radikal $OCOR_{q2}$ aus pflanzlichen oder tierischen Fettsäuren stammt, wobei die Gruppe Rq2 gesättigte oder ungesättigte, lineare oder verzweigte $C_5$- bis $C_{25}$-, bevorzugt $C_{12}$- bis $C_{15}$-Alkylketten umfasst.

**5.** Polymer nach einem der Ansprüche 1 bis 4, wobei die Einheit mit der Formel B für Folgendes steht:

a) entweder eine Einheit mit der Formel B' $-(CF_2\text{-}CHOCOR'_1)_{m'\text{-}x}$, wobei $R'_1$ die Gruppe $CH_3$ ist, m' von 10 bis 75 variiert;
b) oder eine Einheit mit der Formel B"' $-(CH_2\text{-}CHOCOR"'_1)_{m"\text{-}x}$, wobei $R"_1$ die Gruppe $C_2H_5$ ist, m" von 10 bis 75 variiert;
c) oder eine Einheit mit der Formel B"' $-(CH_2\text{-}CHOCOR"'_1)_{m"'\text{-}x}$, wobei $R"'_1$ eine verzweigte $C_5$- bis $C_{15}$-Alkylgruppe ist, wobei die Verzweigung an irgendeinem Punkt des Alkylradikals liegt, bevorzugt an Position 2 oder 3 der Alkylkette, um bevorzugt einen tertiären Kohlenstoff zu erhalten, m"' von 10 bis 75 variiert;

oder ein Gemisch aus diesen, bevorzugt das Gemisch der Einheiten B' und B" oder der Einheiten B' und B"' oder der Einheiten B" und B"'.

**6.** Polymer nach einem der Ansprüche 1 bis 5, wobei:

- n = 79 bis 515;
- die Einheit mit der Formel B für eine Einheit mit der Formel B' $-(CH_2\text{-}CHOCOR'_1)_{m'\text{-}x}$ steht, wobei $R'_1$ die Gruppe $CH_3$ ist und m' von 10 bis 71 variiert;

- x von 0,5 bis 36 variiert, mit x1 = 0.
- Q für eine Einheit mit der Formel Q1 $-(CH_2-CHCOOR)_{p1}-X_q$ steht, wobei q gleich 0, p1 von 1 bis 50 variiert und R für eine lineare oder verzweigte, gesättigte oder ungesättigte $C_1$-$C_{30}$- oder bevorzugt $C_4$-$C_{15}$-Alkylgruppe steht;
- der Mol-% der Einheiten A in dem Polymer bei 54 bis 90 Mol-% liegt;
- der Mol-% der Einheiten B in dem Polymer bei 3,5 Mol-% bis 11 Mol-% liegt;
- der Mol-% der Einheiten C in dem Polymer bei 0 Mol-% liegt;
- der Mol-% der Einheiten D in dem Polymer bei 2,3 Mol-% bis 42 Mol-% liegt und der Mol-% der Einheiten Q in D bei 35 Mol-% bis 98,7 Mol-% liegt.

**7.** Verfahren zur Herstellung von gepfropften Polymeren nach einem der Ansprüche 1 bis 6, das die folgenden Schritte umfasst:

i) Bereitstellen eines Ausgangs-Vinylester- und Ethylenpolymers, umfassend:

a) Einheiten, die von dem Ethylen mit der Formel A $-(CH_2-CH_2)_n-$ abgeleitet sind,
b) mindestens eine Einheit mit der Formel B: $-(CH_2-CHOCOR_1)_m-$,
wobei

- $R_1$ mindestens eine Gruppe, ausgewählt aus den linearen oder verzweigten $C_1$-$C_{15}$-Alkylgruppen ist;
- eine Gruppe $CH_2SH$ oder $CH_2I$;
- n und m innerhalb von Wertebereichen derart variieren, dass die zahlenmittleren Molmassen Mn des Ausgangspolymers zwischen 3.000 und 20.000g.mol-1 liegen;

dann
ii)Einführen eines freien Radikalstarters und Durchführen einer radikalischen Polymerisationsreaktion an Initiationsstellen eines polymerisierbaren Monomers mit der Formel M1 $CH_2$=CZCOOR, oder auch mit der Formel M2 $CH_2$=CZOCOR, Monomer M1 oder M2, wobei Z für einen Wasserstoff oder $CH_3$ steht, die Gruppe R für eine lineare oder verzweigte, gesättigte oder ungesättigte $C_1$-$C_{30}$-Alkylgruppe steht, einer Reaktion, die so ist, dass der Polymerisationsgrad p1 des Monomers M1, um die Einheit Q1 auf der Initiationsstelle zu ergeben, zwischen 1 und 800 liegt, oder auch dass der Polymerisationsgrad p2 des Monomers M2, um die Einheit Q2 auf der Initiationsstelle zu ergeben, zwischen 1 und 100 liegt.

**8.** Verfahren nach Anspruch 7 zur Herstellung der gepfropften Polymere nach einem der Ansprüche 1 bis 6, das die folgenden Schritte umfasst:

j) Bereitstellen eines Ausgangs-Vinylester- und Ethylenpolymers, umfassend:

a) Einheiten, die von dem Ethylen mit der Formel A $-(CH_2-CH_2)_n-$ abgeleitet sind,
b) mindestens eine Einheit mit der Formel B: $-(CH_2-CHOCOR_1)_m-$, wobei $R_1$ mindestens eine Gruppe, ausgewählt aus den linearen oder verzweigten $C_1$-$C_{15}$-Alkylgruppen, ist;
n und m innerhalb von Wertebereichen derart variieren, dass die zahlenmittleren Molmassen Mn des Ausgangspolymers zwischen 3.000 und 20.000g.mol-1 liegen;

dann
jj) Durchführen einer Partialhydrolysereaktion der Alkylester, die in der Einheit B vorhanden sind, so dass der Hydrolysegrad kleiner oder gleich 50 % der hydrolysierbaren Stellen, bevorzugt kleiner 20 % dieser Stellen ist, dann
jjj) Durchführen mindestens einer Partialveresterungs-reaktion dieser Stellen mit einem Halogen-säurehalogenid mit der Formel XOC-CH2-jXj-CH3, wobei j gleich 1 oder 2 ist und X bevorzugt für ein C1-Halogen steht, so dass der Veresterungsgrad größer 50 %, bevorzugt 100 % beträgt; dann
jjjj) Durchführen einer Polymerisationsreaktion an den Initiationsstellen, die ein Halogen tragen, eines Monomers mit der Formel M1 CH2=CZCOOR oder auch eines Monomers mit der Formel M2 $CH_2$=CZOCOR, einem Monomer, worin Z für einen Wasserstoff oder $CH_3$ steht, die Gruppe R für eine lineare oder verzweigte, gesättigte oder ungesättigte $C_1$-$C_{30}$-Alkylgruppe steht, eine Reaktion, die so ist, dass der Polymerisationsgrad $p_1$ des Monomers $M_1$, um die Einheit Q1 auf der Initiationsstelle zu ergeben, zwischen 1 und 50 liegt, oder auch der Polymerisationsgrad p2 des Monomers M2, um die Einheit Q2 auf der Initiationsstelle zu ergeben, zwischen 1 und 6 liegt.

**9.** Herstellungsverfahren nach Anspruch 8, wobei Schritt jjjj) mittels radikalischer Polymerisation unter Atomtransfer (ATRP) in Gegenwart eines katalytischen Systems durchgeführt wird, umfassend ein Übergangsmetall, bevorzugt ein Kupferhalogenid, wie beispielsweise CuBr, und einen Stickstoffliganden, oder wobei Schritt jjjj) auf radikalischem Weg in Gegenwart eines Radikalen-starters durchgeführt wird.

**10.** Herstellungsverfahren nach Anspruch 8, wobei auf Schritt jj) ein Schritt kkk) zum Pfropfen eines funktionalisierten Polyacrylats mit der Formel TOC-$(CH_2$-$CHCOOR)_{p1}$-, wobei p1 und R so sind, wie oben definiert, und T für ein Halogen, insbesondere C1 oder eine Gruppe OH steht, auf die Alkoholgruppen des teilweise hydrolysierten Copolymers, das in Schritt jj) erhalten wurde, folgt.

**11.** Verfahren nach einem der Ansprüche 7 bis 10, wobei das Pfropfverhältnis in Gewichtsanteilen der Einheiten der Copolymere Q1 oder Q2, erhalten mittels Polymerisation der Monomere vom Typ M1 oder M2 auf die Initiationsstellen, 10 bis 80 %, bevorzugt 15 bis 70 % beträgt.

**12.** Verfahren nach einem der Ansprüche 7 bis 11 zur Herstellung der Copolymere, wie in einem der Ansprüche 1 bis 6 definiert.

**13.** Konzentrierte Lösung eines Polymers nach einem der Ansprüche 1 bis 6 in einem Kohlenwasserstoff-destillat, bevorzugt mit einer Konzentration von mehr als 50 Gew.-%, bevorzugt 60 bis 80 Gew.-%.

**14.** Verwendung der konzentrierten Lösung nach Anspruch 13 als Filtrier-und Fließverbesserungsadditiv für Kohlenwasserstoffe vom Typ Mitteldestillate, bevorzugt in Kohlenwasserstoffen, deren Gehalt an n-Paraffinen, die mehr als 18 Kohlenstoffatome enthalten, größer als 4 Gew.-% ist, oder als Grundlage für Kraftstoffe für Dieselmotoren und Haushalts-Heizöle.

**15.** Bifunktionelles Additiv zum Absenken der Filtrierbarkeit und des Fließens bei niedriger Temperatur der flüssigen Kohlenwasserstoffe, umfassend ein gepfropftes Polymer nach einem der Ansprüche 1 bis 6.

**16.** Mitteldestillat, umfassend mindestens einen großen Anteil eines Kohlenwasserstoffschnitts vom Typ Mitteldestillat mit einem Schwefelgehalt kleiner 5.000 ppm, bevorzugt kleiner 500 ppm und stärker bevorzugt kleiner 50 ppm, und einen kleineren Anteil mindestens eines bifunktionellen Filtrier- und Fließverbesserungsadditivs nach Anspruch 15, wobei bevorzugt der größere Anteil aus Destillaten mit einer Siedetemperatur im Bereich zwischen 150 und 450 °C, mit einer Kristallisationsanfangstemperatur Tcc größer oder gleich -5 °C, bevorzugt im Bereich zwischen -5 °C und +10 °C, besteht, umfassend Straight-run-Destillate, Vakuumdestillate, hydroraffinierte Destillate, Destillate, die aus dem katalytischen Cracken und/oder dem Hydrocracken von Vakuumdestillaten stammen, Destillate, die aus Umwandlungsverfahren vom Typ ARDS (durch Entschwefelung des atmosphärischen Rückstands) und/oder zur Viskoeduktion resultieren, Destillate, die aus der Veredelung von Fischer-Tropsch-Schnitten stammen, Destillaten, die aus der BTL-Umwandlung (BTL = Biomass-to-liquid) von pflanzlicher oder tierischer Biomasse resultieren, allein oder in Kombination, und Estern von pflanzlichen- oder tierischen Ölen oder Gemische davon.

**17.** Destillat nach Anspruch 16, dessen Gehalt an n-Paraffinen, die mehr als 18 Kohlenstoffatome enthalten, größer als 4 Gew.-% ist, dessen Gewichtsanteil an n-Paraffinen, deren Kohlenstoffanzahl größer als 24 ist, bevorzugt größer oder gleich 0,7 % ist, dessen Gewichtsanteil an n-Paraffinen mit einer Kohlenstoffanzahl, die zwischen C24 und C40 variiert, bevorzugt zwischen 0,7 und 2 % variiert.

**18.** Diesel-Kraftstoff, umfassend 0 bis 500 ppm Schwefel und umfassend mindestens ein Destillat nach einem der Ansprüche 16 oder 17, wobei bevorzugt der kleinere Teil 10 bis 5.000 ppm mindestens eines bifunktionellen Filtrier- und Fließverbesserungsadditivs nach Anspruch 15 umfasst, gegebenenfalls als Gemisch mit anderen Detergens-, Dispergier-, Demulgations-, Entschäumungs-, Biozidadditiven, Reodoranzien, die Cetanzahl erhöhenden Additiven, Korrosionsverhinderern, Reibungsmodifizierem, Lubrizitätsverbesserern, Verbrennungsunterstützungsmitteln, Mitteln, die den Cloudpoint verbessern, die den Stockpunkt verbessern, Antiabsetzmitteln und die Leitfähigkeit modifizieren Additiven.

**19.** Heizöl, umfassend 0 bis 5.000 ppm Schwefel, umfassend mindestens ein Destillat nach einem der Ansprüche 16 oder 17.

**20.** Schweröl, umfassend mindestens ein Destillat nach einem der Ansprüche 16 oder 17.

## Claims

**1.** Conjugated ethylene-vinyl ester copolymer, with a molar mass of over 10,000 $g.mol^{-1}$ containing:

a) an ethylene-derived group of structure A - $(CH_2\text{-}CH_2)_n$ in which n is a whole number of between 45 to 650;
b) at least one group of structure B: - $(CH_2\text{-}CHOCOR_1)_{m-x}$- in which m is a whole number of between 5 to 110, and $R_1$ is at least one residue selected from the groups of linear or branched alkyl groups, $C_1$-$C_{15;}$
c) one group of structure C: - $(CH_2\text{-}CHOH)_{x1}$- in which $x_1$ ranges from 0 to 0.95 x;
d) at least one group of structure D: - $(CH_2\text{-}CHG)_{x2}$- or of structure D' -$CH_2C(OCOCH3)Q)_{x2}$- in which $x_2$ is never 0 and ranges from 0.05 x to x, preferably $x_2$ is x, and G corresponds to a group of structure G1 or G2 or G3 where

G1 corresponds to the structure -$OCOCHCH_3Q$-
G2 corresponds to the structure -$OCOCH_2Q$-
G3 corresponds to the structure -$OCOCH_2SQ$-

in which Q corresponds to

- either a group of structure Q1 -$(CH_2\text{-}CZCOOR_{q1})_{p1}\text{-}X_q$ in which $p_1$ ranges from 1 to 800;
- or a group of structure Q2 -$(CH_2\text{-}CZOCOR_{q2})_{p2}\text{-}X_q$ in which $p_2$ ranges from 1 to 100;

in which X corresponds to a halogen atom, preferably Br or I, q ranges from 0 to 1, Z corresponds to a hydrogen atom or a $CH_3$ group, and $R_{q1}$ or $R_{q2}$ corresponds to a linear or branched alkyl group, either saturated or unsaturated, $C_1$-$C_{30}$, preferably $C_4$-$C_{15}$, advantageously $C_6$-$C_{15}$ and more advantageously still $C_6$-$C_{12}$, and more particularly 2-ethylhexylacrylate,

copolymer in which
$x = x_1 + x_2$ and x ranges from 0.25 to 55;
the molar percentage of A groups in the polymer is 29-97% in moles;
the molar percentage of B groups in the polymer is 1-20% in moles;
the molar percentage of C groups in the polymer is 0-10% in moles;
the molar percentage of D or D' groups in the polymer is 0.6-64% in moles and the molar percentage of Q in D or D' is de 8.2-99.9% in moles.

**2.** Conjugated ethylene-vinyl ester copolymer according to Claim 1, with a molar mass of between 10500 and 30000 $g.mol^{-1}$, containing:

a) an ethylene-derived group of structure A - $(CH_2\text{-}CH_2)_n$ in which n is a whole number of between 45 to 650, preferably 75 to 520.
b) at least one group of structure B: - $(CH_2\text{-}CHOCOR_1)_{m-x}$- in which m is a whole number of between 5 to 110, preferably 10 to 75, and $R_1$ is at least one residue selected from the groups of linear or branched alkyl groups $C_1$-$C_{15}$;
c) one group of structure C: - $(CH_2\text{-}CHOH)_{x1}$- in which $x_1$ ranges from 0 to 0.95 x, preferably $x_1$ is 0;
d) at least one group of structure D: - $(CH_2\text{-}CHG)_{x2}$- in which $x_2$ is never 0 and ranges from 0.05 x to x, preferably $x_2$ is x and G corresponds to a group of structure G1 -$OCOCHCH_3Q$- in which Q corresponds to:

- either a group of structure Q1 -$(CH_2\text{-}CZCOOR_{q1})_{p1}\text{-}X_q$ $p_1$ ranges from 1 to 800, preferably from 1 to 50;
- or a group of structure Q2 -$(CH_2\text{-}CZOCOR_{q2})_{p2}\text{-}X_q$ $p_2$ ranges from 1 to 100, preferably from 1 to 10;

in which X corresponds to a halogen atom, preferably Br, q ranges from 0 to 1, Z corresponds to a hydrogen atom or a $CH_3$, and $R_{q1}$ or $R_{q2}$ corresponds to a linear or branched alkyl group, either saturated or unsaturated, $C_1$-$C_{30}$, preferably $C_4$-$C_{15}$, advantageously $C_6$-$C_{15}$ and more advantageously still $C_6$-$C_{12}$, and more particularly 2-ethylhexylacrylate,

copolymer in which
$x = x_1 + x_2$ and x ranges from 0.25 to 55 preferably from 0.5 to 40;
the molar percentage of A groups in the polymer is 29-97% in moles, preferably 54-90% in moles;
the molar percentage of B groups in the polymer is 1-20% in moles, preferably 3.5-11% in moles;
the molar percentage of C groups in the polymer is 0-10% in moles, preferably 0% in moles;
the molar percentage of D groups in the polymer is 0.6-64% in moles, preferably 2.3-42% in moles and the

molar percentage of Q in D goes from 8.2-99.9% in moles, preferably 35-98.7% in moles.

**3.** Polymer according to Claim 1 or 2 in which Q represents a group of structure Q1 $-(CH_2-CZCOOR_{q1})_{p1}-X_q$ in which q is 0, and $p_1$ ranges from 1 to 50, and preferably $R_{q1}$ corresponds to a linear or branched alkyl group, either saturated or unsaturated, $C_6$-$C_{15}$ preferably $C_6$-$C_{12}$, preferably representing 2-ethylhexyl acrylate and/or preferably Q represents a group of structure Q2 $-(CH_2-CZOCOR_{q2})_{p2}-X_q$ in which q is 0, $p_2$ ranges from 1 to 10, Z is H, and $Rq_2$ corresponds to a branched alkyl group, $C_5$ to $C_{25}$ preferably $C_5$ to $C_{15}$, in which the branch point may be anywhere in the alkyl chain, preferably in position 2 or 3 of the alkyl chain, preferably in such a way as to generate a tertiary carbon.

**4.** Polymer according to one of claims 1 to 3, in which the group OCO-$R_{q2}$ is selected from the groups of pivalate, isopentanoate, isohexanoate, 2-ethylhexanoate, isononanoate, isodecanoate, isotridecanoate, neononanoate, neodecanoate and neoundecanoate and/or the $OCOR_{q2}$ radical is derived from plant- or animal-derived fatty acids in which the group $R_{q2}$ contains alkyl chains, either saturated or unsaturated, linear or branched, $C_8$ to $C_{25}$, preferably $C_{12}$ to $C_{15}$.

**5.** Polymer according to any of Claims 1 to 4 in which the group of structure B corresponds to:

a) either a group of structure B' $-(CH_2-CHOCOR'_1)_{m'-x}$ in which $R'_1$ is a CH3 group, and m' ranges from 10 to 75;
b) or a group of structure B" $-(CH_2-CHOCOR"_1)_{m"-x}$ in which $R"_1$ is the group $C_2H_5$, and m" ranges from 10 to 75;
c) or a group of structure B"' $-(CH_2-CHOCOR"'_1)_{m-"'x}$ in which $R"'_1$ is a branched alkyl chain, $C_5$ to $C_{15}$, in which the branch point may be anywhere in the alkyl chain, preferably in position 2 or 3 of the alkyl chain, preferably in such a way as to generate a tertiary carbon, and m"' ranges from 10 to 75; or a mixture thereof, preferably a mixture of groups B' and B" or of groups B' and B"' or of groups B" and B"'.

**6.** Polymer according to any of Claims 1 to 5 in which:

n = 79 to 515;
the group of structure B represents a group of structure B' $-(CH_2-CHOCOR'_1)_{m'-x}$ in which $R'_1$ is a CH3 group, and m' ranges from 10 to 71;
x ranges from 0.5 to 36 with $x_1 = 0$.
Q represents a group of structure Q1 - $(CH_2-CHCOOR)_{p1}-X_q$ in which q is 0,
p1 ranges from 1 to 50, and R corresponds to a linear or branched alkyl group, either saturated or unsaturated, $C_1$-$C_{30}$, or preferably $C_4$-$C_{15;}$
the molar percentage of A groups in the polymer is 54-90% in moles
the molar percentage of B groups in the polymer is 3.5%-11% in moles.
the molar percentage of C groups in the polymer is 0% in moles
the molar percentage of D groups in the polymer is 2.3%-42% in moles and
the molar percentage of Q in the group D is 35%-98.7% in moles.

**7.** Process for the preparation of the conjugated polymers according to any of Claims 1 to 6, including the following steps:

i) supply of a starting ethylene-vinyl ester polymer containing:

a) ethylene-derived groups of structure A - $(CH_2-CH_2)_n$-
b) at least one group of structure B: - $(CH_2-CHOCOR_1)_m$- in which $R_1$ is at least one residue selected from the groups of linear or branched alkyls, $C_1$-$C_{15}$; a $CH_2SH$ or $CH_2I$ group;
n and m ranging so that the mean Mn of the starting polymer ranges from 3000 to 20000g.mol$^{-1}$; followed by

ii) introduction of a free radical initiator and free radical-catalysed polymerisation at the priming sites of a polymerisable monomer of structure M1 $CH_2$=CZCOOR, or possibly of structure M2 $CH_2$=CZOCOR, a monomer M1 or M2 in which Z corresponds to a hydrogen atom or a $CH_3$ group, the group R corresponding to a linear or branched alkyl group, either saturated or unsaturated, $C_1$-$C_{30}$, reacting in such a way that the extent of polymerisation p1 of the monomer M1 to give the group Q1 at the priming site goes from 1 to 800, or possibly the extent of polymerisation p2 of the monomer M2 to give the group Q2 at the priming site goes from 1 to 100.

**8.** Process according to Claim 7 for the preparation of the conjugated polymers according to any of Claims 1 to 6, including the following steps:

j) supply of a starting ethylene-vinyl ester polymer containing:

a) ethylene-derived groups of structure A - $(CH_2\text{-}CH_2)_n$-
b) at least one group of structure B: - $(CH_2\text{-}CHOCOR_1)_m$- in which $R_1$ is at least one residue selected from the groups of linear or branched alkyls, $C_1$-$C_{15}$;
n and m ranging so that the mean Mn of the starting polymer ranges from 3000 to 20000g.mol$^{-1}$; followed by

jj) partial hydrolysis of the alkyl esters present in the group B such that the hydrolysis efficiency is less than or equal to 50% of the hydrolysable sites, preferably less than 20% of said sites; followed by
jjj) partial esterification of these sites with a halide of halogenic acid of structure $XOC\text{-}CH_{2\text{-}j}X_j\text{-}CH_3$ in which j is 1 or 2, and X represents a halogen atom, preferably Cl, such that the esterification efficiency is greater than 50% preferably 100%; followed by
jjjj) polymerisation at the priming sites carrying a halogen atom, of a monomer of structure M1 $CH_2$=CZCOOR, or possibly of a monomer of structure M2 $CH_2$=CZOCOR, a monomer in which Z corresponds to a hydrogen atom or a $CH_3$ group, the group R corresponding to a linear or branched alkyl group, either saturated or unsaturated, $C_1$-$C_{30}$, reacting in such a way that the extent of polymerisation p1 of the monomer M1 to give the group Q1 at the priming site goes from 1 to 50, or possibly the extent of polymerisation p2 of the monomer M2 to give the group Q2 at the priming site goes from 1 to 6.

**9.** Preparation process according to Claim 8 in which the step jjjj) is achieved by atom transfer radical polymerisation (ATRP) in the presence of a catalytic system including a transition metal, preferably a copper halide such as CuBr, and a nitrogen-containing ligand or the step jjjj) is achieved by free radical-mediated polymerisation in the presence of a free radical initiator.

**10.** Preparation process according to Claim 8 in which the step jj) is followed by a step kkk) involving the conjugation of a functionalised polyacryate of structure TOC-$(CH2\text{-}CHCOOR)_{p1}$- in which p1 and R are as defined above and T represents a halogen atom, in particular Cl, or an OH group, onto the copolymer's partially hydrolysed alcohol groups generated in step jj).

**11.** Process according to any of Claims 7 to 10 in which the efficiency of conjugation in the weight of copolymer groups Q1 or Q2 achieved by polymerisation of the M1 and M2 monomers at said priming sites ranges from 10 to 80%, preferably from 15 to 70%.

**12.** Process according to any of Claims 7 to 11 for the preparation of copolymers as defined in any of Claims 1 to 6.

**13.** Concentrated solution of a polymer according to any of Claims 1 to 6 in a hydrocarbon distillate, preferably at a concentration of over 50% wt., preferably from 60 to 80% wt.

**14.** Utilisation of the concentrated solution according to Claim 17 as a filterability and flow additive for middle distillate-type hydrocarbons, preferably in hydrocarbons with a content of n-paraffins containing more than 18 carbon atoms of over 4% by weight or as a base for fuels for diesel motors and domestic heating oils.

**15.** Double-purpose additive to improve the low-temperature filterability and flow of liquid hydrocarbons containing a conjugated polymer according to any of Claims 1 to 6.

**16.** Middle distillates containing at least a major component of a middle distillate-type hydrocarbon fraction with a sulphur content of less than 5000 ppm, preferably blow 500 ppm, and more preferably still below 50 ppm, and a minor component of at least one double-purpose filterability and flow additive according to Claim 15, preferably in which the major component is constituted by distillates boiling at between 150 and 450°C with a crystallisation commencement temperature Tcc greater than or equal to -5°C, preferably between -5°C and +10°C, including distillates from direct distillation, vacuum distillates, hydroprocessed distillates, distillates generated by catalytic cracking and/or hydro-cracking of vacuum distillates, distillates resulting from ARDS (atmospheric residue desulphuration) conversion and/or visco-reduction processes, distillates from the recovery of Fischer Tropsch fractions, distillates generated by BTL (biomass-to-liquid) conversion of plant- and/or animal-derived material, alone or in combination, and esters of plant- and/or animal-derived lipids or mixtures thereof

**17.** Distillate according to Claim 16 with a content of n-paraffins containing more than 18 carbon atoms of over 4% in weight, preferably with a content of n-paraffins containing more than 24 carbon atoms greater than or equal to 0.7%,

preferably with a content of n-paraffins with a carbon number from C24 to C40 ranging from 0.7 to 2%.

**18.** Diesel fuel containing 0-500 ppm sulphur and at least one distillate according to any of Claims 16 or 17, preferably in which the minor component contains 10-5000 ppm of at least one double-purpose filterability and flow additive according to Claim 15, possibly mixed with other additives such as detergents, dispersing agents, de-mulsifying agents, anti-foaming agents, biocides, deodorants, ketane improvers, anti-corrosion agents, and modifiers of friction, lubrication, combustion, cloud point, pour point, sedimentation and conductivity.

**19.** Heating fuel containing 0-5000 ppm sulphur and at least one distillate according to any of Claims 16 or 17.

**20.** Heavy fuel containing at least one distillate according to any of Claims 16 or 17.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20040226216 A
- US 3275427 A
- US 3726653 A
- US 4156422 A
- US 4161452 A
- US 6106584 A
- US 20060137242 A
- US 20070157509 A
- US 4202845 A


### Littérature non-brevet citée dans la description


- **GARCIA F. G. et al.** *Eur Polym J.,* 2002, vol. 38, 759
- **GARCIA F. G. et al.** *Polym. Int.,* 2002, vol. 51, 1340-1347
- **TEODORESCU M. et al.** *Reactive&Functional Polymers,* 2004, vol. 61, 387-395